# EUROPEAN PATENT SPECIFICATION

(11) **EP 2 908 238 B1**
(45) Date of publication and mention of the grant of the patent: **30.05.2018**
(21) Application number: 14197986.4
(22) Date of filing: 15.12.2014
(51) Int. Cl.: G06F 3/14, H04W 4/02

(54) **MULTI-TERMINAL POSITIONING METHODS, RELATED DEVICES AND SYSTEM**
MEHRPOLIGE POSITIONIERUNGSVERFAHREN, ZUGEHÖRIGE VORRICHTUNGEN UND SYSTEM
PROCÉDÉS DE POSITIONNEMENT MULTI-TERMINAL, DISPOSITIFS ET SYSTÈME ASSOCIÉS

(30) Priority: 30.12.2013 CN 201310746331
(43) Date of publication of application: 19.08.2015
(73) Proprietor: Huawei Technologies Co., Ltd., Longgang District Shenzhen, Guangdong 518129 (CN)
(72) Inventor: Song, Xingguang, Shenzhen Guangdong 518129 (CN); Lian, Shiguo, Shenzhen Guangdong 518129 (CN); Hu, Wei, Shenzhen Guangdong 518129 (CN)
(74) Representative: Maiwald Patent- und Rechtsanwaltsgesellschaft mbH

(56) References cited:
- EP-A1- 2 667 299
- US-A1- 2011 252 317
- US-A1- 2012 280 898

## Description

### TECHNICAL FIELD

The present invention relates to the field of intelligent terminal technologies, and in particular, to multi-terminal positioning methods, and related devices and system.

### BACKGROUND

Currently, after intelligent terminals become popular, a new trend appears. That is, multiple intelligent terminals are paired to work collaboratively, for example, multiple intelligent terminals are used to collaboratively display a picture, or multiple intelligent terminals are used to create a surround sound effect. To enable collaborative operation between among multiple terminals, relative positions between the terminals must be firstly determined.

In the prior art, multi-terminal positioning is mainly using two terminals that simultaneously transmit an ultrasonic signal to each other; and calculating a distance from one terminal to the other terminal by using a received ultrasonic signal sent by the other terminal and a received ultrasonic signal sent by the terminal itself. However, the manner of multi-terminal positioning by transmitting ultrasound in the prior art can only be performed between two terminals, and only the distance between the two terminals is calculated, so the positioning efficiency is low.

US 2012/0280898 A1 describes methods for controlling information detail in a multi-device environment. The methods provide for operating a device in a multi-device environment, directing the presentation, on a display of the device, of a first image, detecting a motion of the device, directing a change of the image presented on the display of the device from the first image to a second image in response to detecting the motion of the device. The first image presented on the device is related to images displayed on other devices in the multi-device environment. The second image may be a scaled version of the first image and the second image may be scaled based on at least one property of the motion. Each device in the multi-device environment may be directed to display a portion of a complete image, where the first image is a portion of the complete image. This document discloses a multi-device-single-display system in which the single devices are paired using a gesture or exploiting position tracking technologies.

### SUMMARY

In view of this, embodiments of the present invention mainly aim to provide a multi-terminal positioning method, and a related device and system, so as to resolve a problem of low efficiency of multi-terminal positioning in the prior art.

To resolve the foregoing problem, the present invention provides the following technical solutions:
According to a first aspect, the present invention provides a multi-terminal positioning method, where the method includes:
establishing, by a primary terminal after receiving a collaboration request activation signal triggered by a user, connections to secondary terminals in a wireless connection manner;
calculating and displaying, by the primary terminal according to received device configuration parameters of the secondary terminals and the number of secondary terminals, at least one arrangement shape of all terminals and at least one demarcated gesture that matches each arrangement shape, and recording one arrangement shape selected by the user and one demarcated gesture that matches the arrangement shape;
triggering sensors of the terminals using the demarcated gesture;
receiving, by the primary terminal, sensor trigger information sent by at least one secondary terminal; and
calculating, by the primary terminal according to the recorded arrangement shape and demarcated gesture, and the sensor trigger information, an arrangement sequence of all terminals and relative positions between the terminals due to the use of the demarcated gesture.

Aspects of the present invenntion are defined by the independent claims.

Further embodiments are provided by the dependent claims.

Embodiments not falling under the scope of the claims are provided for explanation purpose only in the description.

In a first implementation manner of the first aspect, the primary terminal is a terminal among all terminals that meets a preset condition.

With reference to the first aspect or the first implementation manner of the first aspect, in a second implementation manner of the first aspect, the sensor trigger information includes:
trigger time, a trigger manner, and a sensor triggering type; where
information about the sensor triggering type includes one or a combination of infrared triggering, light triggering and image triggering.

With reference to the first aspect, the first implementation manner of the first aspect, or the second implementation manner of the first aspect, in a third implementation manner of the first aspect, the calculating, by the primary terminal according to the recorded arrangement shape and demarcated gesture, and the sensor trigger information, an arrangement sequence of all terminals and relative positions between the terminals includes:
determining, by the primary terminal from at least one piece of sensor trigger information sent by each secondary terminal, sensor trigger information provided by a sensor of a highest priority;
arranging, by the primary terminal, the terminals in a sequence according to trigger time included in the sensor trigger information provided by the sensor of the highest priority in each terminal, and determining the arrangement sequence of the terminals according to the recorded arrangement shape and demarcated gesture; and
calculating, by the primary terminal according to the trigger time included in the sensor trigger information provided by the sensor of the highest priority in each terminal, a trigger time difference between successively triggered terminals as a relative position between the successively triggered terminals.

With reference to the third implementation manner of the first aspect, in a fourth implementation manner of the first aspect, the method further includes:
calculating, by the primary terminal according to the trigger time difference and an empirical speed value, a relative distance between the successively triggered terminals as the relative position between the successively triggered terminals.

In a fifth implementation manner of the first aspect, after the receiving, by the primary terminal, sensor trigger information detected by at least one secondary terminal, the method further includes:
determining, by the primary terminal, whether sensor trigger information sent by all the secondary terminals is received; if yes, calculating, according to the recorded arrangement shape and demarcated gesture, and the sensor trigger information, the arrangement sequence of all terminals and the relative positions between the terminals; and if no, displaying failure information and receiving again sensor trigger information sent by at least one secondary terminal.

With reference to the fifth implementation manner of the first aspect, in a sixth implementation manner of the first aspect, after the primary terminal determines that the sensor trigger information sent by all the secondary terminals is received, and before the calculating, according to the recorded arrangement shape and demarcated gesture, and the sensor trigger information, the arrangement sequence of all terminals and the relative positions between the terminals, the method further includes:
determining, by the primary terminal, whether an exception exists in the sensor trigger information; if yes, displaying failure information and receiving again sensor trigger information sent by at least one secondary terminal; and if no, calculating, according to the recorded arrangement shape and demarcated gesture, and the sensor trigger information, the arrangement sequence of all terminals and the relative positions between the terminals.

With reference to the sixth implementation manner of the first aspect, in a seventh implementation manner of the first aspect, the determining, by the primary terminal, whether an exception exists in the sensor trigger information includes:
determining, by the primary terminal according to the recorded arrangement shape and demarcated gesture, whether any abnormal trigger time exists in the sensor trigger information; or
determining, by the primary terminal, whether any abnormal sensor triggering type exists in the sensor trigger information.

According to a second aspect, the present invention provides a multi-terminal positioning method, where the method includes:
establishing, by a secondary terminal after receiving a collaboration request activation signal triggered by a user, a connection to a primary terminal in a wireless connection manner;
sending, by the secondary terminal, a device configuration parameter to the primary terminal, so that the primary terminal calculates and displays, according to received device configuration parameters of secondary terminals and the number of secondary terminals, at least one arrangement shape of all terminals and at least one demarcated gesture that matches each arrangement shape; and
when it is detected that a sensor is triggered, sending, by the secondary terminal, detected sensor trigger information to the primary terminal, so that the primary terminal calculates, according to the recorded arrangement shape and demarcated gesture, and the sensor trigger information, an arrangement sequence of all terminals and relative positions between the terminals.

In a first implementation manner of the second aspect, the primary terminal is a terminal among all terminals that meets a preset condition.

With reference to the second aspect or the first implementation manner of the second aspect, in a second implementation manner of the second aspect, the sensor trigger information includes:
trigger time, a trigger manner, and a sensor triggering type; where
information about the sensor triggering type includes one or a combination of infrared triggering, light triggering and image triggering.

According to a third aspect, the present invention provides a primary terminal, where the primary terminal includes:
a first receiving unit, configured to receive a collaboration request activation signal triggered by a user;
a connecting unit, configured to establish connections to secondary terminals in a wireless connection manner when the first receiving unit receives the collaboration request activation signal;
a second receiving unit, configured to receive device configuration parameters of the secondary terminals that have established connections to the primary terminal by using the connecting unit;
a first calculating unit, configured to calculate and display, according to the device configuration parameters received by the second receiving unit and the number of secondary terminals, at least one arrangement shape of all terminals and at least one demarcated gesture that matches each arrangement shape;
a recording unit, configured to, after the first calculating unit calculates and displays the at least one arrangement shape of all terminals and the at least one demarcated gesture that matches each arrangement shape, record one arrangement shape selected by the user and one demarcated gesture that matches the arrangement shape;
a third receiving unit, configured to receive sensor trigger information sent by at least one secondary terminal that has established a connection to the primary terminal by using the connecting unit; and
a second calculating unit, configured to calculate, according to the arrangement shape and the demarcated gesture that are recorded by the recording unit and the sensor trigger information received by the third receiving unit, an arrangement sequence of all terminals and relative positions between the terminals.

In a first implementation manner of the third aspect, the primary terminal is a terminal among all terminals that meets a preset condition.

With reference to the third aspect or the first implementation manner of the third aspect, in a second implementation manner of the third aspect, the sensor trigger information includes:
trigger time, a trigger manner, and a sensor triggering type; where
information about the sensor triggering type includes one or a combination of infrared triggering, light triggering and image triggering.

With reference to the third aspect, the first implementation manner of the third aspect, or the second implementation manner of the third aspect, in a third implementation manner of the third aspect, the second calculating unit includes:
an information determining subunit, configured to determine, from at least one piece of sensor trigger information that is sent by each secondary terminal and received by the third receiving unit, sensor trigger information provided by a sensor of a highest priority;
a sequence determining subunit, configured to arrange the terminals in a sequence according to trigger time included in the sensor trigger information that is provided by the sensor of the highest priority in each terminal and determined by the information determining subunit, and determine the arrangement sequence of the terminals according to the arrangement shape and the demarcated gesture that are recorded by the recording unit; and
a first position determining subunit, configured to calculate, according to the trigger time included in the sensor trigger information that is provided by the sensor of the highest priority in each terminal and determined by the information determining subunit, a trigger time difference between successively triggered terminals as a relative position between the successively triggered terminals.

With reference to the third implementation manner of the third aspect, in a fourth implementation manner of the third aspect, the second calculating unit further includes:
a second position determining subunit, configured to calculate, according to an empirical speed value and the trigger time difference that is obtained by the first position determining subunit by means of calculation, a relative distance between the successively triggered terminals as the relative position between the successively triggered terminals.

In a fifth implementation manner of the third aspect, the primary terminal further includes:
a failure prompting unit, configured to display failure information; and
a first validity determining unit, configured to determine whether the third receiving unit has received sensor trigger information detected by all the secondary terminals, where if a result of the determining of the first validity determining unit is yes, the second calculating unit calculates, according to the arrangement shape and the demarcated gesture that are recorded by the recording unit and the sensor trigger information received by the third receiving unit, the arrangement sequence of all terminals and the relative positions between the terminals; and if the result of the determining of the first validity determining unit is no, the failure prompting unit displays the failure information and the third receiving unit receives again sensor trigger information sent by at least one secondary terminal that has established a connection to the primary terminal by using the connecting unit.

In a sixth implementation manner of the third aspect, the primary terminal further includes:
a failure prompting unit, configured to display failure information; and
a second validity determining unit, configured to determine whether an exception exists in the sensor trigger information received by the third receiving unit, where, if a result of the determining of the second validity determining unit is yes, the failure prompting unit displays the failure information, and the third receiving unit receives again the sensor trigger information sent by at least one secondary terminal that has established a connection to the primary terminal by using the connecting unit; and if the result of the determining of the second validity determining unit is no, the second calculating unit calculates, according to the arrangement shape and the demarcated gesture that are recorded by the recording unit and the sensor trigger information received by the third receiving unit, the arrangement sequence of all terminals and the relative positions between the terminals.

With reference to the sixth implementation manner of the third aspect, in a seventh implementation manner of the third aspect, the second validity determining unit is specifically configured to:
determine, according to the arrangement shape and the demarcated gesture that are recorded by the recording unit, whether any abnormal trigger time exists in the sensor trigger information received by the third receiving unit; or
determine whether any abnormal sensor triggering type exists in the sensor trigger information received by the third receiving unit.

According to a fourth aspect, the present invention provides a secondary terminal, where the secondary terminal includes:
a receiving unit, configured to receive a collaboration request activation signal triggered by a user;
a connecting unit, configured to establish a connection to a primary terminal in a wireless connection manner when the receiving unit receives the collaboration request activation signal;
a first sending unit, configured to send a device configuration parameter to the primary terminal, so that the primary terminal calculates and displays, according to received device configuration parameter of secondary terminals and the number of secondary terminals, at least one arrangement shape of all terminals and at least one demarcated gesture that matches each arrangement shape; and
a second sending unit, configured to, when it is detected that a sensor is triggered, send detected sensor trigger information to the primary terminal, so that the primary terminal calculates, according to the recorded arrangement shape and demarcated gesture, and the sensor trigger information, an arrangement sequence of all terminals and relative positions between the terminals.

In a first implementation manner of the fourth aspect, the primary terminal is a terminal among all terminals that meets a preset condition.

With reference to the fourth aspect or the first implementation manner of the fourth aspect, in a second implementation manner of the fourth aspect, the sensor trigger information includes:
trigger time, a trigger manner, and a sensor triggering type; where
information about the sensor triggering type includes one or a combination of infrared triggering, light triggering and image triggering.

According to a fifth aspect, a multi-terminal positioning system is provided, where the system includes:
a primary terminal and several secondary terminals, where
the primary terminal is the primary terminal provided in the third aspect of the present invention; and
the secondary terminal is the secondary terminal provided in the fourth aspect of the present invention.

It can be seen that, the embodiments of the present invention have the following beneficial effects:
According to the embodiments of the present invention, a primary terminal informs a user of a possible arrangement shape of all terminals and a matching demarcated gesture. When the user triggers sensors of the terminals by using the demarcated gesture, the primary terminal may receive sensor trigger information detected by the terminals, and directly calculate an arrangement sequence of all terminals and relative positions of the terminals according to the sensor trigger information, a terminal arrangement shape selected by the user, and a corresponding demarcated gesture, so as to complete positioning of multiple terminals in only one demarcation process, thereby improving the positioning efficiency. In addition, according to the embodiments of the present invention, the sensor trigger information is obtained by using a gesture to trigger the sensors, which, with a strong anti-interference capability, is not easily subjected to interference from environmental noise.

### BRIEF DESCRIPTION OF DRAWINGS

FIG. 1 is a flowchart of Embodiment 1 of a multi-terminal positioning method in embodiments of the present invention;
FIG. 2(a) is a schematic diagram of a terminal arrangement shape according to an embodiment of the present invention;
FIG. 2(b) is a schematic diagram of a terminal arrangement shape and a matching demarcated gesture according to an embodiment of the present invention;
FIG. 3 is a schematic diagram of a trigger manner according to an embodiment of the present invention;
FIG. 4 is a flowchart of Embodiment 2 of the multi-terminal positioning method in the embodiments of the present invention;
FIG. 5 is a flowchart of Embodiment 3 of the multi-terminal positioning method in the embodiments of the present invention;
FIG. 6 is a schematic diagram of a terminal arrangement sequence according to an embodiment of the present invention;
FIG. 7 is a schematic diagram of relative positions of terminals according to an embodiment of the present invention;
FIG. 8 is a flowchart of Embodiment 4 of the multi-terminal positioning method in the embodiments of the present invention;
FIG. 9 is a flowchart of an embodiment of a multi-terminal positioning system in the embodiments of the present invention;
FIG. 10 is a schematic diagram of Embodiment 1 of a primary terminal in the embodiments of the present invention;
FIG. 11 is a schematic diagram of Embodiment 2 of the primary terminal in the embodiments of the present invention;
FIG. 12 is a schematic diagram of Embodiment 3 of the primary terminal in the embodiments of the present invention;
FIG. 13 is a schematic diagram of Embodiment 4 of the primary terminal in the embodiments of the present invention;
FIG. 14 is a schematic diagram of Embodiment 1 of a secondary terminal in the embodiments of the present invention; and
FIG. 15 is a schematic diagram of Embodiment 2 of the secondary terminal in the embodiments of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

A multi-terminal positioning method and a related device and system provided in the embodiments of the present invention can be applied to a multi-terminal collaboration scenario, where multi-terminal collaboration means that multiple terminal devices may be paired to perform various operations, and only after an arrangement sequence and relative positions between the terminals are determined can the terminals be used to perform collaborative operations, such as collaborative display and gesture recognition. However, problems of low efficiency and inaccurate measurement in multi-terminal positioning exist in the prior art. Therefore, the following multi-terminal positioning method and related device and system are provided in the embodiments of the present invention.

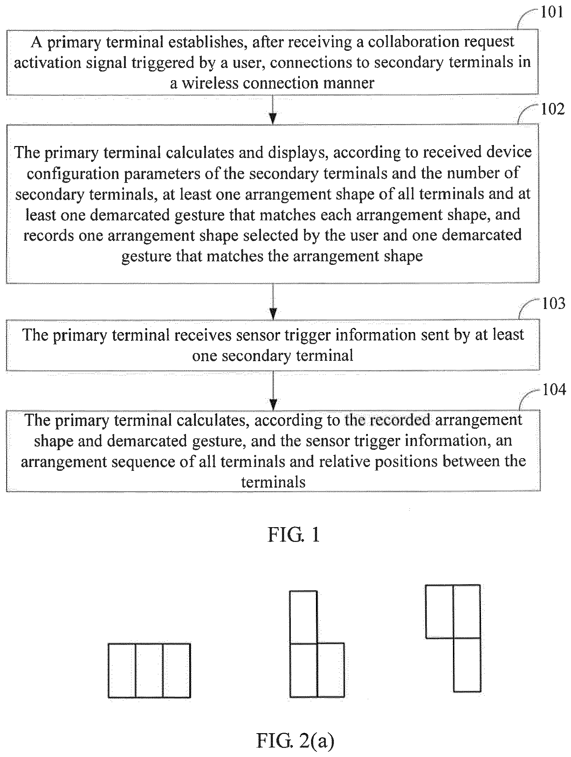

As shown in FIG. 1, Embodiment 1 of a multi-terminal positioning method in the embodiments of the present invention may include the following steps, and a primary terminal is used as an execution body in the description of this embodiment:
Step 101: The primary terminal establishes, after receiving a collaboration request activation signal triggered by a user, connections to secondary terminals in a wireless connection manner.

A collaboration function needs to be activated for all terminals that need to participate in collaboration. For example, a user may trigger the collaboration request activation signal by starting a dedicated application app (app is short for application). The primary terminal establishes, after receiving the collaboration request activation signal triggered by the user, connections to the secondary terminals in a wireless connection manner, where the wireless connection manner may be various manners, including but not limited to Wi-fi, Miracast, 3G (3rd-generation, the third generation of mobile telecommunications technologies), Bluetooth, and so on. Wi-fi is wireless compatibility certification and is a technology that enables a personal computer, a handheld device, and other terminals to interconnect with each other in a wireless manner. Miracast is a certification program established by the Wi-Fi Alliance, and a wireless standard based on Wi-fi Direct (Wi-fi Direct).

In this embodiment, a terminal among all terminals that meets a preset condition may be determined as the primary terminal, and other terminals are determined as the secondary terminals. That is, the primary terminal is a terminal among all terminals that meets a preset condition. For example, a terminal that first starts an app may be determined as the primary terminal, or a terminal whose processor has a highest dominant frequency may be determined as the primary terminal. As a primary device in interaction, the primary terminal can receive user operation information and information sent by the secondary terminals, and implement multi-terminals positioning. The secondary terminals can send information such as a device configuration parameter or detected sensor trigger information to the primary terminal so that the primary terminal can implement multi-terminals positioning.

Step 102: The primary terminal calculates and displays, according to received device configuration parameters of the secondary terminals and the number of secondary terminals, at least one arrangement shape of all terminals and at least one demarcated gesture that matches each arrangement shape, and records one arrangement shape selected by the user and one demarcated gesture that matches the arrangement shape.

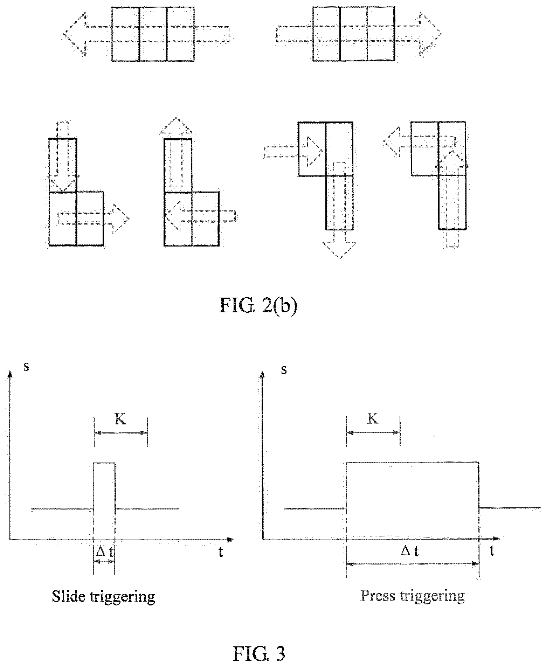

The secondary terminals may send device configuration parameters, for example, as a terminal screen size parameter and a screen resolution, to the primary terminal. The primary terminal may calculate, according to the device configuration parameters of the secondary terminals and the number of secondary terminals, a possible arrangement shape of all terminals. For example, as shown in FIG. 2(a), where three terminals are as an example, an arrangement shape of the terminals may be a line, an L shape, an inverted L shape, or the like. Each arrangement shape may match multiple demarcated gestures, for example, a clockwise, counterclockwise, or ZigZag gesture. As shown in FIG. 2(b), where three terminals are still as an example, a line-shaped arrangement shape may have two demarcated gestures: slide to the left and slide to the right; the arrangement shape of an L shape or inverted L shape may have a clockwise or counterclockwise demarcated gesture.

After calculating the at least one arrangement shape of all terminals and the at least one demarcated gesture that matches each arrangement shape, the primary terminal may display the arrangement shape and the demarcated gesture in a visible manner for the user to select. When the number of terminals is relatively small, all combinations of arrangement shapes and demarcated gestures may be displayed; and when the number of terminals is relatively large, a preferable combination of arrangement shapes and demarcated gestures may be displayed.

After the user selects the arrangement shape and the demarcated gesture, the primary terminal needs to record one arrangement shape selected by the user and one demarcated gesture that matches the arrangement shape.

Step 103: The primary terminal receives sensor trigger information sent by at least one secondary terminal.

Various sensors are disposed in a terminal. A sensor is triggered when the user slides on the terminal by using a demarcated gesture. The sensor may include but is not limited to an infrared sensor, a light sensor, a terminal capacitive screen, an ultrasonic detector, or an image sensor. Therefore, the demarcated gesture used by the user may be an air gesture.

Currently, sensors integrated to terminals are essentially switch-type sensors, and some sensors are further capable of detecting several discrete states. Therefore, a trigger manner may be classified into slide triggering or press triggering. As shown in FIG. 3, the trigger manner is mainly determined according to a change time Δ*t* of a sensor state S: If Δ*t* is greater than a time constant K, it may be considered as press triggering; and if Δ*t* is less than the time constant K, it is slide triggering. The time constant K may be determined according to an empirical value and usually ranges from Is to 3s.

The primary terminal and the secondary terminals can detect a change of sensor signals, and terminals (including the primary terminal and the secondary terminals) send detected sensor trigger information to the primary terminal. It should be noted that various sensors may be triggered in a gesture demarcation process, and in this case, various sensor trigger information is sent to the primary terminal altogether. In some embodiments of the present invention, the sensor trigger information may include but is not limited to trigger time, a trigger manner, and a sensor triggering type. The sensor triggering type may include but is not limited to one or a combination of infrared triggering, light triggering and image triggering. If the trigger manner is press triggering, the trigger time may be a boundary time when the triggering starts or ends.

Step 104: The primary terminal calculates, according to the recorded arrangement shape and demarcated gesture, and the sensor trigger information, an arrangement sequence of all terminals and relative positions between the terminals.

On a precondition that the arrangement shape and the demarcated gesture are determined, the primary terminal may calculate the arrangement sequence of all terminals and the relative positions between the terminals according to the sensor trigger information detected by the terminals. The arrangement sequence indicates horizontal, vertical and like arrangement sequences of the terminals, and a relative position indicates a specific position relationship, for example a distance, between terminals.

In this embodiment, a primary terminal informs a user of a possible arrangement shape of all terminals and a matching demarcated gesture. When the user triggers sensors of the terminals by using the demarcated gesture, the primary terminal may receive sensor trigger information detected by the terminals, and directly calculate an arrangement sequence of all terminals and relative positions between the terminals according to the sensor trigger information, a terminal arrangement shape selected by the user, and a corresponding demarcated gesture, so as to complete positioning of multiple terminals in only one demarcation process, thereby improving the positioning efficiency. In addition, according to this embodiment of the present invention, the sensor trigger information is obtained by using a gesture to trigger the sensors, which, with a strong anti-interference capability, is not easily subjected to interference from environmental noise.

In some embodiments of the present invention, in the multi-terminal positioning method according to this embodiment of the present invention, after the primary terminal receives sensor trigger information detected by the terminals, validity of the sensor trigger information may be determined in advance to improve accuracy of subsequent calculation of the arrangement sequence of all terminals and the relative positions of the terminals.

Specifically, in some embodiments of the present invention, after the primary terminal receives the sensor trigger information detected by the at least one secondary terminal, the multi-terminal positioning method further includes:
determining, by the primary terminal, whether sensor trigger information sent by all the secondary terminals is received; if yes, calculating, according to the recorded arrangement shape and demarcated gesture, and the sensor trigger information, the arrangement sequence of all terminals and the relative positions between the terminals; and if no, displaying failure information and receiving again sensor trigger information sent by at least one secondary terminal.

In some embodiments of the present invention, after the primary terminal determines that the sensor trigger information sent by all the secondary terminals is received, and before the calculating, according to the recorded arrangement shape and demarcated gesture, and the sensor trigger information, the arrangement sequence of all terminals and the relative positions between the terminals, the multi-terminal positioning method further includes:
determining, by the primary terminal, whether an exception exists in the sensor trigger information; if yes, displaying failure information and receiving again sensor trigger information sent by at least one secondary terminal; and if no, calculating, according to the recorded arrangement shape and demarcated gesture, and the sensor trigger information, the arrangement sequence of all terminals and the relative positions between the terminals.

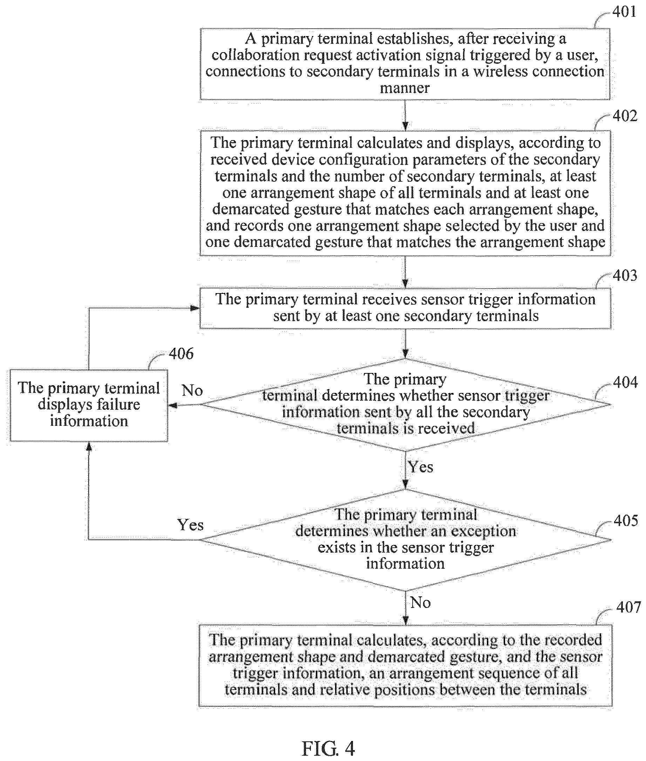

Therefore, as shown in FIG. 4, Embodiment 2 of the multi-terminal positioning method in the embodiments of the present invention may include the following steps:
Step 401: A primary terminal establishes, after receiving a collaboration request activation signal triggered by a user, connections to secondary terminals in a wireless connection manner.
Step 402: The primary terminal calculates and displays, according to received device configuration parameters of the secondary terminals and the number of secondary terminals, at least one arrangement shape of all terminals and at least one demarcated gesture that matches each arrangement shape, and records one arrangement shape selected by the user and one demarcated gesture that matches the arrangement shape.
Step 403: The primary terminal receives sensor trigger information sent by at least one secondary terminal.
Step 404: The primary terminal determines whether sensor trigger information sent by all the secondary terminals is received; if yes, goes to step 405; and if no, goes to step 406.

The primary terminal receives the sensor trigger information of the terminals, and the information includes, if the primary terminal is a terminal that also needs to be positioned, sensor trigger information of the primary terminal and sensor trigger information of the secondary terminals. The primary terminal determines whether the sensor trigger information of all terminals is received, so as to preliminarily determine validity of the information, and if yes, preliminarily determines that the information is valid and that further validity determination is needed; otherwise, the primary terminal displays failure information in a visible or another manner to inform the user that gesture demarcation is unsuccessful and a new demarcation is required.

Step 405: The primary terminal determines whether an exception exists in the sensor trigger information; if yes, goes to step 406; and if no, goes to step 407.

After receiving the sensor trigger information of all terminals, the primary terminal needs to determine the validity of and filter the trigger information. The purpose of validity determination is to remove false trigger information caused by a system delay or a detection error, so as to improve system calculation accuracy, where common false trigger information includes abnormal trigger time, an abnormal sensor triggering type, or the like. After determining the validity of the trigger information, an arrangement sequence and relative positions of the terminals may be obtained by means of calculation according to a combination of a terminal arrangement shape parameter and demarcated gesture information.

Specifically, in some embodiments of the present invention, a specific implementation manner in which the primary terminal determines whether an exception exists in the sensor trigger information may include:
determining, by the primary terminal according to the recorded arrangement shape and demarcated gesture, whether any abnormal trigger time exists in the sensor trigger information;
or determining, by the primary terminal, whether any abnormal sensor triggering type exists in the sensor trigger information.

Step 406: The primary terminal displays failure information, and returns to step 403.

Step 407: The primary terminal calculates, according to the recorded arrangement shape and demarcated gesture, and the sensor trigger information, an arrangement sequence of all terminals and relative positions between the terminals.

In this embodiment, a primary terminal determines whether sensor trigger information detected by all terminals is received, determines whether an exception exists in the sensor trigger information, determines validity of the sensor trigger information, and notifies a user in time to perform multi-terminal positioning again when a gesture demarcation fails, thereby improving the positioning efficiency, avoiding inaccurate multi-terminal positioning caused by an abnormal sensor or other reasons, improving the calculation accuracy, and optimizing the implementation of multi-terminal positioning.

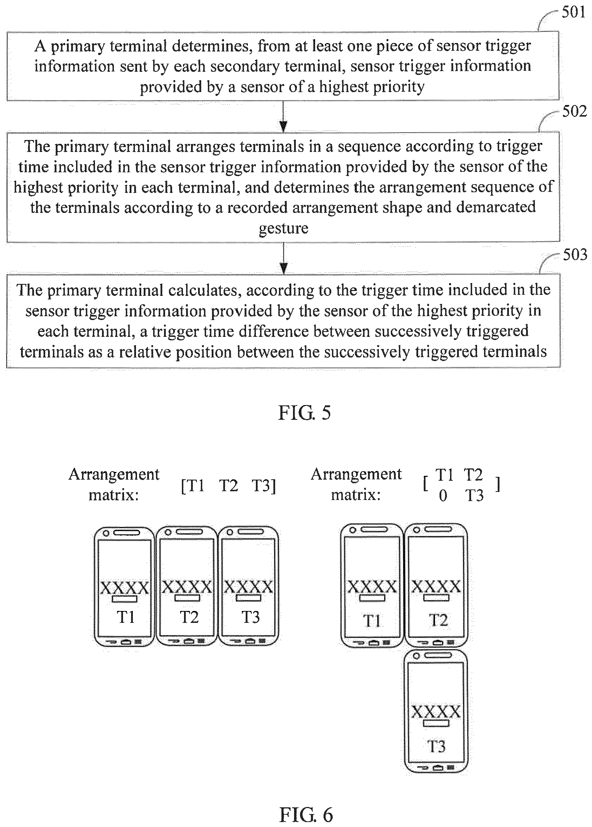

As shown in FIG. 5, Embodiment 3 of the multi-terminal positioning method in the embodiments of the present invention may include the following steps. In this embodiment, a specific implementation manner in which a primary terminal calculates an arrangement sequence of all terminals and relative positions between the terminals according to a recorded arrangement shape and demarcated gesture, and sensor trigger information is mainly described.

Step 501: The primary terminal determines, from at least one piece of sensor trigger information sent by each secondary terminal, sensor trigger information provided by a sensor of a highest priority.

In this embodiment, the primary terminal filters the received sensor trigger information and each terminal saves one piece of most significant sensor trigger information. For example, a sensor priority may be set, and infrared trigger information in multiple pieces of sensor trigger information of a terminal is determined as sensor trigger information provided by a sensor of a highest priority. When the infrared trigger information of the terminal is abnormal, light trigger information may be used as the sensor trigger information provided by a sensor of a highest priority.

Step 502: The primary terminal arranges the terminals in a sequence according to trigger time included in the sensor trigger information provided by the sensor of the highest priority in each terminal, and determines the arrangement sequence of the terminals according to the recorded arrangement shape and demarcated gesture.

The primary terminal arranges the sensor trigger information of the terminals according to a time sequence, and the arrangement shape of the terminals and a direction of the demarcated gesture are known; and therefore, the arrangement sequence of the terminals may be obtained. The arrangement sequence may be described by using an arrangement matrix; however, a manner in which the arrangement sequence of the terminals is described is not limited to use of an arrangement matrix.

As shown in FIG. 6, three terminals are used as an example. When the three terminals (T1, T2, and T3) are sequentially arranged in a line, the arrangement sequence of the terminals may be described by an arrangement matrix [*T*1 *T*2 *T*3]*.* When the three terminals (T1, T2, and T3) are sequentially arranged in an inverted L shape, the arrangement sequence of the terminals may be described by an arrangement matrix $\left[\begin{matrix}T 1 & T 2 \\ 0 & T 3\end{matrix}\right] .$

Step 503: The primary terminal calculates, according to the trigger time included in the sensor trigger information provided by the sensor of the highest priority in each terminal, a trigger time difference between successively triggered terminals as a relative position between the successively triggered terminals.

A relative position between terminals may refer to a distance between the terminals. In this embodiment, because the terminals are triggered by sensors, this distance mainly refers to a distance between sensors. The distance may be measured in many manners, for example, a physical distance, or according to a time difference between triggered sensors in a gesture sliding process (herein it is assumed that a person's gesture sliding speed is basically constant in one scenario). In this embodiment, a time difference Δ*t* may be used to describe a relative position between terminals.

The primary terminal calculates a trigger time difference between sensor trigger information of successively triggered sensors and obtains a relative position between the terminals. The relative position may be described by using a position matrix; however, a manner in which relative positions between terminals are described is not limited to the position matrix.

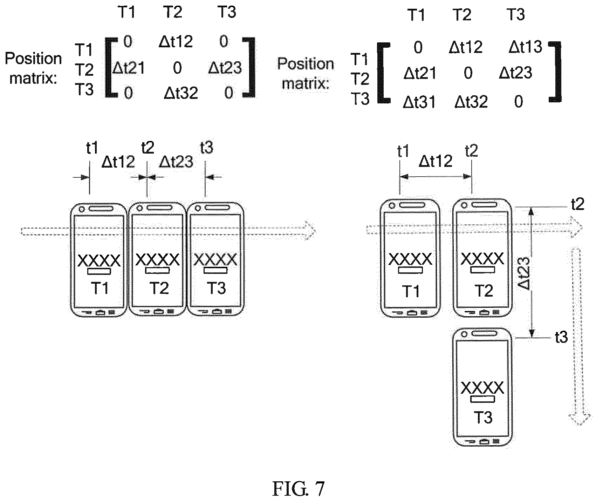

As shown in FIG. 7, three terminals are still used as an example. When the three terminals (T1, T2, and T3) are sequentially arranged in a line, a trigger time difference between T1 and T2 is Δ*t*12, a trigger time difference between T2 and T3 is Δ*t*23*,* and relative positions between the terminals may be described by a position matrix$\begin{matrix}\begin{matrix} & T 1 & T 2 & T 3\end{matrix} \\ \begin{matrix}T 1 \\ T 2 \\ T 3\end{matrix} \left[\begin{matrix}0 & Δ t 12 & 0 \\ x & 0 & Δ t 23 \\ 0 & Δ t 32 & 0\end{matrix}\right] .\end{matrix}$When the three terminals are sequentially arranged in an inverted L shape, a trigger time difference between T1 and T2 is Δ*t*12, a trigger time difference between T2 and T3 is Δ*t*23, and relative positions of the terminals may be described by a position matrix $\begin{matrix}\begin{matrix} & T 1 & T 2 & T 3\end{matrix} \\ \begin{matrix}T 1 \\ T 2 \\ T 3\end{matrix} \left[\begin{matrix}0 & Δ t 12 & Δ t 13 \\ Δ t 21 & 0 & Δ t 23 \\ Δ t 31 & Δ t 32 & 0\end{matrix}\right] .\end{matrix}$

In some embodiments of the present invention, after step 503 of this embodiment of the present invention, the multi-terminal positioning method may further include:
calculating, by the primary terminal according to the trigger time difference and an empirical speed value, a relative distance between the successively triggered terminals as the relative position between the successively triggered terminals.

That is, the relative position may be described by using the trigger time difference, and the relative position may also be described by calculating an appropriate distance between terminals by using the empirical speed value or a calculated sliding speed, and the trigger time difference.

In this embodiment, a primary terminal implements calculation of an arrangement sequence of all terminals and relative positions between the terminals according to a recorded arrangement shape and demarcated gesture, and sensor trigger information, so as to complete positioning of multiple terminals in only one demarcation process, thereby improving efficiency of positioning multiple terminals.

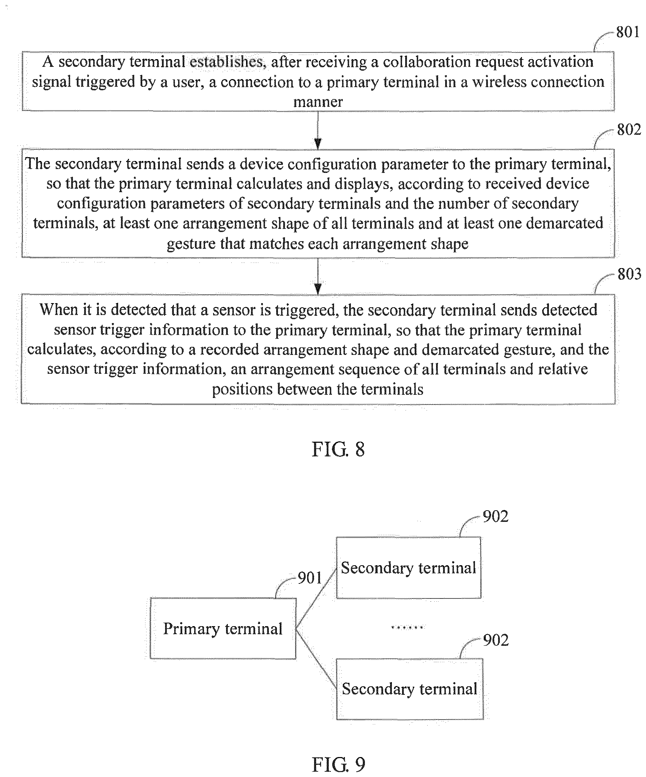

As shown in FIG. 8, Embodiment 4 of the multi-terminal positioning method in the embodiments of the present invention may include the following steps, and a secondary terminal is used as an execution body in the description of this embodiment:
Step 801: The secondary terminal establishes, after receiving a collaboration request activation signal triggered by a user, a connection to a primary terminal in a wireless connection manner.

A collaboration function needs to be activated for all terminals that need to participate in collaboration. For example, the collaboration request activation signal may be sent by starting a dedicated app. After receiving the collaboration request activation signal triggered by the user, the secondary terminal establishes a connection to the primary terminal in a wireless connection manner, where the wireless connection manner may be various manners, including but not limited to Wi-fi, Miracast, 3G, Bluetooth, and so on.

In this embodiment, a terminal among all terminals that meets a preset condition may be determined as the primary terminal, and other terminals are determined as secondary terminals. That is, the primary terminal is a terminal among all terminals that meets a preset condition. As a primary device in interaction, the primary terminal can receive user operation information and information sent by the secondary terminals, and implement multi-terminals positioning. The secondary terminals can send information such as a device configuration parameter or detected sensor trigger information to the primary terminal so that the primary terminal can implement multi-terminals positioning.

Step 802: The secondary terminal sends a device configuration parameter to the primary terminal, so that the primary terminal calculates and displays, according to received device configuration parameters of secondary terminals and the number of secondary terminals, at least one arrangement shape of all terminals and at least one demarcated gesture that matches each arrangement shape.

The secondary terminals may send device configuration parameters, for example, a terminal screen size parameter and a screen resolution, to the primary terminal, so that the primary terminal can calculate, according to the device configuration parameters of the secondary terminals and the number of secondary terminals, a possible arrangement shape of all terminals and multiple demarcated gestures that match each arrangement shape.

Step 803: When it is detected that a sensor is triggered, the secondary terminal sends detected sensor trigger information to the primary terminal, so that the primary terminal calculates, according to the recorded arrangement shape and demarcated gesture, and the sensor trigger information, an arrangement sequence of all terminals and relative positions between the terminals.

Various sensors are disposed in a terminal. A sensor is triggered when the user slides on the terminal by using a demarcated gesture. The sensor may include but is not limited to an infrared sensor, a light sensor, a terminal capacitive screen, an ultrasonic detector, or an image sensor. Therefore, the demarcated gesture used by the user may be an air gesture.

Currently, the sensors integrated in the terminals are basically switching sensors, and some sensors are further capable of detecting several discrete states. Therefore, trigger manners may be classified into slide triggering and press triggering.

The secondary terminal can detect a change of sensor signals and send detected sensor trigger information to the primary terminal. It should be noted that various sensors may be triggered in a gesture demarcation process, and various sensor trigger information is sent to the primary terminal altogether. In some embodiments of the present invention, the sensor trigger information may include but is not limited to trigger time, a trigger manner, and a sensor triggering type. Information about the sensor triggering type may include but is not limited to one or a combination of infrared triggering, light triggering and image triggering. If the trigger manner is press triggering, information about trigger time may be boundary time when the triggering starts or ends.

In this embodiment, when a user triggers sensors of a terminal by using a demarcated gesture, a secondary terminal sends detected sensor trigger information to a primary terminal, so that the primary terminal may directly calculate an arrangement sequence of all terminals and relative positions of the terminals according to the sensor trigger information, a terminal arrangement shape selected by the user, and a corresponding demarcated gesture, so as to complete positioning multiple terminals in only one demarcation process, thereby improving the positioning efficiency. In addition, according to this embodiment of the present invention, the sensor trigger information is obtained by using a gesture to trigger the sensors, which, with a strong anti-interference capability, is not easily subjected to interference from environmental noise.

Corresponding to the embodiments of the foregoing multi-terminal positioning method, as shown in FIG. 9, the present invention further provides an embodiment of a multi-terminal positioning system where the system includes a primary terminal 901 and several secondary terminals 902.

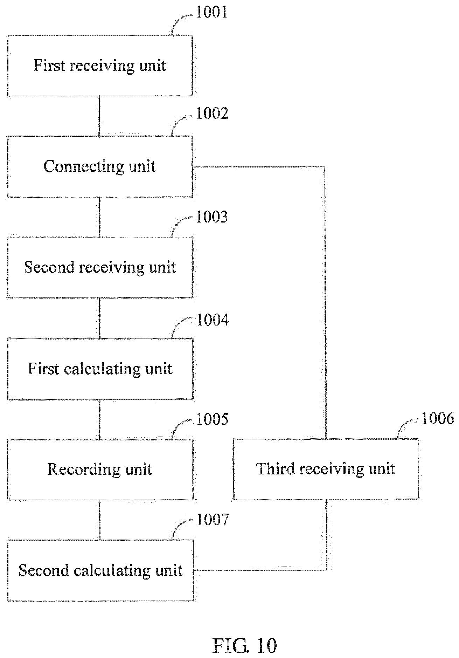

In some embodiments of the present invention, a terminal among all terminals that meets a preset condition may be determined as a primary terminal, and other terminals are determined as secondary terminals. That is, the primary terminal is a terminal among all terminals that meets the preset condition. As shown in FIG. 10, Embodiment 1 of the primary terminal in the embodiments of the present invention may include:
a first receiving unit 1001, configured to receive a collaboration request activation signal triggered by a user;
a connecting unit 1002, configured to establish connections to secondary terminals in a wireless connection manner when the first receiving unit receives the collaboration request activation signal;
a second receiving unit 1003, configured to receive device configuration parameters of the secondary terminals that have established connections to the primary terminal by using the connecting unit;
a first calculating unit 1004, configured to calculate and display, according to the device configuration parameters received by the second receiving unit and the number of secondary terminals, at least one arrangement shape of all terminals and at least one demarcated gesture that matches each arrangement shape;
a recording unit 1005, configured to, after the first calculating unit calculates and displays the at least one arrangement shape of all terminals and the at least one demarcated gesture that matches each arrangement shape, record one arrangement shape selected by the user and one demarcated gesture that matches the arrangement shape; and
a third receiving unit 1006, configured to receive sensor trigger information sent by at least one secondary terminal that has established a connection to the primary terminal by using the connecting unit.

In some embodiments of the present invention, the sensor trigger information may include: trigger time, a trigger manner, and a sensor triggering type.

Information about the sensor triggering type includes one or a combination of infrared triggering, light triggering and image triggering.

A second calculating unit 1007 is configured to calculate, according to the arrangement shape and the demarcated gesture that are recorded by the recording unit and the sensor trigger information received by the third receiving unit, an arrangement sequence of all terminals and relative positions between the terminals.

In some embodiments of the present invention, the primary terminal according to this embodiment of the present invention may further include:
a failure prompting unit, configured to display failure information.

In some embodiments of the present invention, the primary terminal according to this embodiment of the present invention may further include:
a first validity determining unit, configured to determine whether the third receiving unit has received sensor trigger information detected by all the secondary terminals, where if a result of the determining of the first validity determining unit is yes, the second calculating unit calculates, according to the arrangement shape and the demarcated gesture that are recorded by the recording unit and the sensor trigger information received by the third receiving unit, the arrangement sequence of all terminals and the relative positions between the terminals; and if the result of the determining of the first validity determining unit is no, the failure prompting unit displays the failure information, and the third receiving unit receives again the sensor trigger information sent by at least one secondary terminal that has established a connection to the primary terminal by using the connecting unit.

In some embodiments of the present invention, the primary terminal according to this embodiment of the present invention may further include:
a second validity determining unit, configured to determine whether an exception exists in the sensor trigger information received by the third receiving unit, where if a result of the determining of the second validity determining unit is yes, the failure prompting unit displays the failure information, and the third receiving unit receives again the sensor trigger information sent by at least one secondary terminal that has established a connection to the primary terminal by using the connecting unit; and if the result of the determining of the second validity determining unit is no, the second calculating unit calculates, according to the arrangement shape and the demarcated gesture that are recorded by the recording unit and the sensor trigger information received by the third receiving unit, the arrangement sequence of all terminals and the relative positions between the terminals.

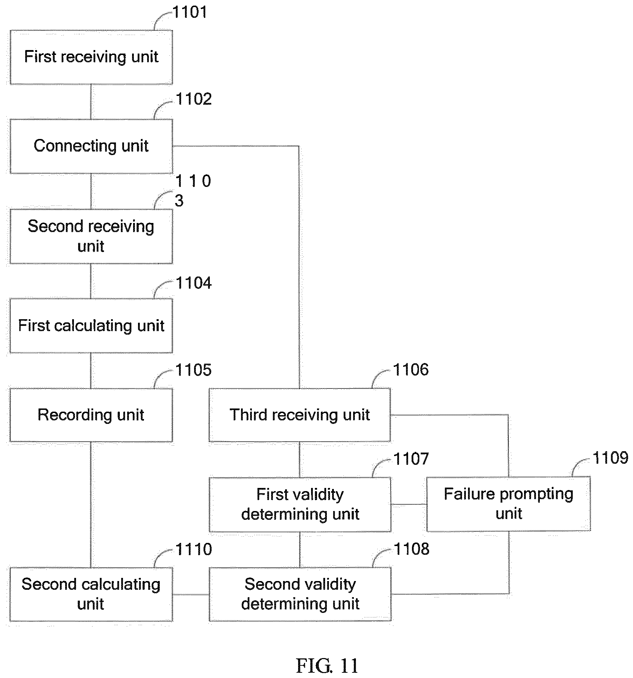

As shown in FIG. 11, Embodiment 2 of the primary terminal in the embodiments of the present invention may include:
a first receiving unit 1101, configured to receive a collaboration request activation signal triggered by a user;
a connecting unit 1102, configured to establish connections to secondary terminals in a wireless connection manner when the first receiving unit receives the collaboration request activation signal;
a second receiving unit 1003, configured to receive device configuration parameters of the secondary terminals that have established connections to the primary terminal by using the connecting unit; a first calculating unit 1104, configured to calculate and display, according to the device configuration parameters received by the second receiving unit and the number of secondary terminals, at least one arrangement shape of all terminals and at least one demarcated gesture that matches each arrangement shape;
a recording unit 1105, configured to, after the first calculating unit calculates and displays the at least one arrangement shape of all terminals and the at least one demarcated gesture that matches each arrangement shape, record one arrangement shape selected by the user and one demarcated gesture that matches the arrangement shape;
a third receiving unit 1106, configured to receive sensor trigger information sent by at least one secondary terminal that has established a connection to the primary terminal by using the connecting unit;
a first validity determining unit 1107, configured to determine whether the third receiving unit has received sensor trigger information detected by all the secondary terminals, where if a result of the determining of the first validity determining unit is yes, the second calculating unit calculates, according to the arrangement shape and the demarcation gesture that are recorded by the recording unit and the sensor trigger information received by the third receiving unit, an arrangement sequence of all terminals and relative positions between the terminals; and if the result of the determining of the first validity determining unit is no, a failure prompting unit displays the failure information, and the third receiving unit receives again sensor trigger information sent by at least one secondary terminal that has established a connection to the primary terminal by using the connecting unit; and
a second validity determining unit 1108, configured to determine whether an exception exists in the sensor trigger information received by the third receiving unit, where if a result of the determining of the second validity determining unit is yes, the failure prompting unit displays the failure information, and the third receiving unit receives again sensor trigger information sent by at least one secondary terminal that has established a connection to the primary terminal by using the connecting unit; and if the result of the determining of the second validity determining unit is no, the second calculating unit calculates, according to the arrangement shape and the demarcated gesture that are recorded by the recording unit and the sensor trigger information received by the third receiving unit, the arrangement sequence of all terminals and the relative positions between the terminals, where,
in some embodiments of the present invention, the second validity determining unit according to this embodiment of the present invention may be specifically configured to:
   determine, according to the arrangement shape and the demarcated gesture that are recorded by the recording unit, whether any abnormal trigger time exists in the sensor trigger information received by the third receiving unit; or
   determine whether any abnormal sensor triggering type exists in the sensor trigger information received by the third receiving unit;
the failure prompting unit 1109, configured to display failure information; and
a second calculating unit 1110, configured to calculate, according to the arrangement shape and the demarcated gesture that are recorded by the recording unit and the sensor trigger information received by the third receiving unit, the arrangement sequence of all terminals and the relative positions between the terminals.

In this embodiment of the present invention, a primary terminal informs a user of a possible arrangement shape of all terminals and a matching demarcated gesture. When the user triggers sensors of the terminals by using the demarcated gesture, the primary terminal may receive sensor trigger information detected by the terminals, directly calculate an arrangement sequence of all terminals and relative positions of the terminals according to the sensor trigger information, a terminal arrangement shape selected by the user, and a corresponding demarcated gesture, so as to complete positioning of multiple terminals in only one demarcation process, thereby improving the positioning efficiency. In addition, according to this embodiment of the present invention, the sensor trigger information is obtained by using a gesture to trigger the sensors, which, with a strong anti-interference capability, is not easily subjected to interference from environmental noise.

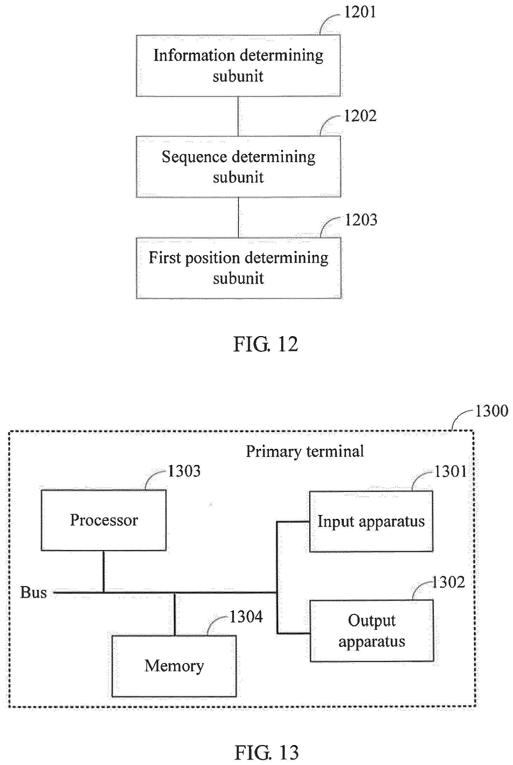

As shown in FIG. 12, in Embodiment 3 of the primary terminal in the embodiments of the present invention, the second calculating unit may include:
an information determining subunit 1201, configured to determine, from at least one piece of sensor trigger information that is sent by each secondary terminal and received by the third receiving unit, sensor trigger information provided by a sensor of a highest priority;
a sequence determining subunit 1202, configured to arrange the terminals in a sequence according to trigger time included in the sensor trigger information that is provided by the sensor of the highest priority in each terminal and determined by the information determining subunit, and determine the arrangement sequence of the terminals according to the arrangement shape and the demarcated gesture that are recorded by the recording unit; and
a first position determining subunit 1203, configured to calculate, according to the trigger time included in the sensor trigger information that is provided by the sensor of the highest priority in each terminal and determined by the information determining subunit, a trigger time difference between successively triggered terminals as a relative position between the successively triggered terminals.

In some embodiments of the present invention, the second calculating unit may further include:
a second position determining subunit, configured to calculate, according to an empirical speed value and the trigger time difference that is obtained by the first position determining subunit by means of calculation, a relative distance between the successively triggered terminals as the relative position between the successively triggered terminals.

In this embodiment, a primary terminal implements calculation of an arrangement sequence of all terminals and relative positions between the terminals according to a recorded arrangement shape and demarcated gesture, and sensor trigger information, and completes positioning multiple terminals in only one demarcation process, thereby improving efficiency of positioning multiple terminals.

The foregoing describes a primary terminal in the embodiments of the present invention from a perspective of a modular functional entity, and the following describes the primary terminal in the embodiments of the present invention from a hardware processing perspective. As shown in FIG. 13, Embodiment 4 of the primary terminal in the embodiments of the present invention may include:
an input apparatus 1301, an output apparatus 1302, a processor 1303, and a memory 1304 (there may be one or more processors 1301 in the primary terminal 1300, and one processor 1301 is used as an example in FIG. 13). In some embodiments of the present invention, the input apparatus 1301, the output apparatus 1302, the processor 1303, and the memory 1304 may be connected by using a bus or in other manners. A connection by using a bus is used as an example in FIG. 13.

By invoking an operation instruction saved in the memory 1304, the processor 1303 is configured to perform the following steps:
establishing, after receiving a collaboration request activation signal triggered by a user, connections to secondary terminals in a wireless connection manner;
calculating and displaying, according to received device configuration parameters of the secondary terminals and the number of secondary terminals, at least one arrangement shape of all terminals and at least one demarcated gesture that matches each arrangement shape, and record one arrangement shape selected by the user and one demarcated gesture that matches the arrangement shape;
receiving sensor trigger information sent by at least one secondary terminal; and
calculating, according to the recorded arrangement shape and demarcated gesture, and the sensor trigger information, an arrangement sequence of all terminals and relative positions between the terminals.

In some embodiments of the present invention, the processor 1303 is further configured to perform the following steps:
determining, from at least one piece of sensor trigger information sent by each secondary terminal, sensor trigger information provided by a sensor of a highest priority;
arranging the terminals in a sequence according to trigger time included in the sensor trigger information provided by the sensor of the highest priority in each terminal, and determine the arrangement sequence of the terminals according to the recorded arrangement shape and demarcated gesture; and
calculating, according to the trigger time included in the sensor trigger information provided by the sensor of the highest priority in each terminal, a trigger time difference between successively triggered terminals as a relative position between the successively triggered terminals.

In some embodiments of the present invention, the processor 1303 is further configured to perform the following step:
calculating, according to the trigger time difference and an empirical speed value, a relative distance between the successively triggered terminals as the relative position between the successively triggered terminals.

In some embodiments of the present invention, the processor 1303 is further configured to perform the following steps:
determining whether sensor trigger information sent by all the secondary terminals is received; if yes, calculating, according to the recorded arrangement shape and demarcated gesture, and the sensor trigger information, the arrangement sequence of all terminals and the relative positions between the terminals; and if no, displaying failure information and receiving again sensor trigger information sent by at least one secondary terminal.

In some embodiments of the present invention, the processor 1303 is further configured to perform the following steps:
determining whether an exception exists in the sensor trigger information; if yes, displaying failure information and receive again sensor trigger information sent by at least one secondary terminal; and if no, calculating, according to the recorded arrangement shape and demarcated gesture, and the sensor trigger information, the arrangement sequence of all terminals and the relative positions between the terminals.

In some embodiments of the present invention, the processor 1303 is further configured to perform the following step:
determining, according to the recorded arrangement shape and demarcated gesture, whether any abnormal trigger time exists in the sensor trigger information; or
determining whether any abnormal sensor triggering type exists in the sensor trigger information.

In this embodiment, when a user is prompted of a possible arrangement shape of all terminals and a matching demarcated gesture, and when the user triggers sensors of the terminals by using the demarcated gesture, a processor 1303 may receive sensor trigger information detected by the terminals, and directly calculate an arrangement sequence of all terminals and relative positions of the terminals according to the sensor trigger information, a terminal arrangement shape selected by the user, and a corresponding demarcated gesture, so as to complete positioning of multiple terminals in only one demarcation process, thereby improving the positioning efficiency. In addition, according to this embodiment of the present invention, the sensor trigger information is obtained by using a gesture to trigger the sensors, which, with a strong anti-interference capability, is not easily subjected to interference from environmental noise.

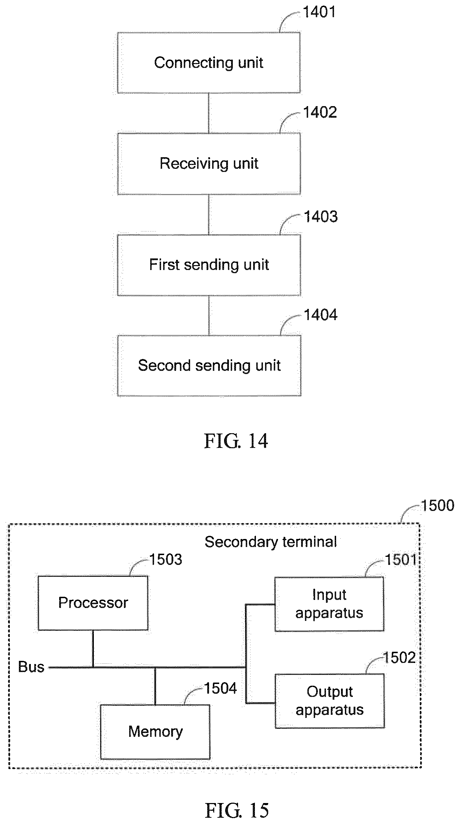

In some embodiments of the present invention, a terminal among all terminals that meets a preset condition may be determined as the primary terminal, and other terminals are determined as the secondary terminals. That is, the primary terminal is a terminal among all terminals that meets the preset condition. As shown in FIG. 14, an embodiment of the a secondary terminal in the embodiments of the present invention may include:
a receiving unit 1401, configured to receive a collaboration request activation signal triggered by a user;
a connecting unit 1402, configured to establish a connection to a primary terminal in a wireless connection manner when the receiving unit receives the collaboration request activation signal;
a first sending unit 1403, configured to send a device configuration parameter to the primary terminal, so that the primary terminal calculates and displays, according to received device configuration parameters of secondary terminals and the number of secondary terminals, at least one arrangement shape of all terminals and at least one demarcated gesture that matches each arrangement shape; and
a second sending unit 1404, configured to, when it is detected that a sensor is triggered, send detected sensor trigger information to the primary terminal, so that the primary terminal calculates, according to the recorded arrangement shape and demarcated gesture, and the sensor trigger information, an arrangement sequence of all terminals and relative positions between the terminals.

In some embodiments of the present invention, the sensor trigger information may include: trigger time, a trigger manner, and a sensor triggering type.

Information about the sensor triggering type includes one or a combination of infrared triggering, light triggering and image triggering.

In this embodiment, when a user triggers sensors of a terminal by using a demarcated gesture, a secondary terminal sends detected sensor trigger information to a primary terminal, so that the primary terminal may directly calculate an arrangement sequence of all terminals and relative positions of the terminals according to the sensor trigger information, a terminal arrangement shape selected by the user, and a corresponding demarcated gesture, so as to complete positioning of multiple terminals in only one demarcation process, thereby improving the positioning efficiency. In addition, according to this embodiment of the present invention, the sensor trigger information is obtained by using a gesture to trigger the sensors, which, with a strong anti-interference capability, is not easily subjected to interference from environmental noise.

The foregoing describes a secondary terminal in embodiments of the present invention from a perspective of a modular functional entity, and the following describes the secondary terminal in the embodiments of the present invention from a hardware processing perspective. As shown in FIG. 15, Embodiment 2 of the secondary terminal in the embodiments of the present invention may include:
an input apparatus 1501, an output apparatus 1502, a processor 1503, and a memory 1504 (there may be one or more processors 1501 in the secondary terminal 1500, and one processor 1501 is used as an example in FIG. 15). In some embodiments of the present invention, the input apparatus 1501, the output apparatus 1502, the processor 1503, and the memory 1504 may be connected by using a bus or in other manners. A connection by using a bus is used as an example in FIG. 15.

By invoking an operation instruction saved in the memory 1504, the processor 1503 is configured to perform the following steps:
establishing, after receiving a collaboration request activation signal triggered by a user, a connection to a primary terminal in a wireless connection manner;
sending a device configuration parameter to the primary terminal, so that the primary terminal calculates and displays, according to received device configuration parameters of secondary terminals and the number of secondary terminals, at least one arrangement shape of all terminals and at least one demarcated gesture that matches each arrangement shape; and
when it is detected that a sensor is triggered, sending detected sensor trigger information to the primary terminal, so that the primary terminal calculates, according to the recorded arrangement shape and demarcated gesture, and the sensor trigger information, an arrangement sequence of all terminals and relative positions between the terminals.

In this embodiment, when a user triggers sensors of a terminal by using a demarcated gesture, a processor 1503 sends detected sensor trigger information to a primary terminal, so that the primary terminal may directly calculate an arrangement sequence of all terminals and relative positions of the terminals according to the sensor trigger information, a terminal arrangement shape selected by the user, and a corresponding demarcated gesture, so as to complete positioning of multiple terminals in only one demarcation process, thereby improving the positioning efficiency. In addition, according to this embodiment of the present invention, the sensor trigger information is obtained by using a gesture to trigger the sensors, which, with a strong anti-interference capability, is not easily subjected to interference from environmental noise.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

It should be further noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a..." does not, without more constraints, preclude the presence of additional identical elements in the process, method, article, or device that includes the element.

The foregoing embodiments are merely intended to describe the technical solutions of the present invention, but not to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A multi-terminal positioning method, wherein the method comprises:
establishing (101, 401), by a primary terminal (901) after receiving a collaboration request activation signal triggered by a user, connections to secondary terminals (902) in a wireless connection manner;
calculating and displaying (102, 402), by the primary terminal (901) according to received device configuration parameters of the secondary terminals and the number of secondary terminals, at least one arrangement shape of all terminals and at least one demarcated gesture that matches each arrangement shape, and recording one arrangement shape selected by the user and one demarcated gesture that matches the arrangement shape;
triggering sensors of the terminals using the demarcated gesture;
receiving (103, 403), by the primary terminal, sensor trigger information sent by at least one secondary terminal, wherein the sensor trigger information comprises a trigger time generated by the at least one secondary terminal; and
calculating (104, 407), by the primary terminal according to the recorded arrangement shape and demarcated gesture, and the sensor trigger information, an arrangement sequence of all terminals and relative positions between the terminals by calculating, by the primary terminal, a trigger time difference between sensor trigger information of successively triggered sensors due to the use of the demarcated gesture.

2. The method according to claim 1, wherein the primary terminal (901) is a terminal among all terminals that meets a preset condition.

3. The method according to claim 1 or 2, wherein the sensor trigger information further comprises:
a trigger manner and a sensor triggering type, wherein
information about the sensor triggering type comprises one or a combination of infrared triggering, light triggering and image triggering.

4. The method according to any one of claims 1 to 3, wherein the calculating, by the primary terminal according to the recorded arrangement shape and demarcated gesture, and the sensor trigger information, an arrangement sequence of all terminals and relative positions between the terminals comprises:
determining, by the primary terminal from at least one piece of sensor trigger information sent by each secondary terminal, sensor trigger information provided by a sensor of a highest priority;
arranging, by the primary terminal, the terminals in a sequence according to trigger time comprised in the sensor trigger information provided by the sensor of the highest priority in each terminal, and determining the arrangement sequence of the terminals according to the recorded arrangement shape and demarcated gesture; and
calculating, by the primary terminal according to the trigger time comprised in the sensor trigger information provided by the sensor of the highest priority in each terminal, a trigger time difference between successively triggered terminals as a relative position between the successively triggered terminals.

5. The method according to claim 4, wherein the method further comprises:
calculating, by the primary terminal according to the trigger time difference and an empirical speed value, a relative distance between the successively triggered terminals as the relative position between the successively triggered terminals.

6. The method according to claim 1, wherein, after the receiving, by the primary terminal, sensor trigger information detected by at least one secondary terminal, the method further comprises:
determining (404), by the primary terminal, whether sensor trigger information sent by all the secondary terminals is received; if yes, calculating (407), according to the recorded arrangement shape and demarcated gesture, and the sensor trigger information, the arrangement sequence of all terminals and the relative positions between the terminals; and if no, displaying (406) failure information and receiving (403) again sensor trigger information sent by at least one secondary terminal.

7. The method according to claim 6, wherein, after the primary terminal determines (404) whether the sensor trigger information sent by all the secondary terminals is received, and before the calculating (407), according to the recorded arrangement shape and demarcated gesture, and the sensor trigger information, the arrangement sequence of all terminals and the relative positions between the terminals, the method further comprises:
determining (405), by the primary terminal, whether an exception exists in the sensor trigger information; if yes, displaying failure information and receiving again sensor trigger information sent by at least one secondary terminal; and if no, calculating, according to the recorded arrangement shape and demarcated gesture, and the sensor trigger information, the arrangement sequence of all terminals and the relative positions between the terminals.

8. The method according to claim 7, wherein the determining, by the primary terminal, whether an exception exists in the sensor trigger information comprises:
determining, by the primary terminal according to the recorded arrangement shape and demarcated gesture, whether any abnormal trigger time exists in the sensor trigger information; or
determining, by the primary terminal, whether any abnormal sensor triggering type exists in the sensor trigger information.

9. A multi-terminal positioning method, wherein the method comprises:
establishing (801), by a secondary terminal (902) after receiving a collaboration request activation signal triggered by a user, a connection to a primary terminal (901) in a wireless connection manner;
sending (802), by the secondary terminal (902), a device configuration parameter to the primary terminal, so that the primary terminal calculates and displays, according to received device configuration parameters of secondary terminals and the number of secondary terminals, at least one arrangement shape of all terminals and at least one demarcated gesture that matches each arrangement shape; and
when it is detected that a sensor is triggered by using the demarcated gesture, sending (803), by the secondary terminal, detected sensor trigger information to the primary terminal, wherein the sensor trigger information comprises a trigger time generated by the secondary terminal, so that the primary terminal calculates, according to the recorded arrangement shape and demarcated gesture, and the sensor trigger information, an arrangement sequence of all terminals and relative positions between the terminals by calculating, by the primary terminal, a trigger time difference between sensor trigger information of successively triggered sensors due to the use of the demarcated gesture.

10. The method according to claim 9, wherein the primary terminal is a terminal among all terminals that meets a preset condition.

11. The method according to claim 9 or 10, wherein the sensor trigger information comprises:
a trigger manner and a sensor triggering type; wherein
information about the sensor triggering type comprises one or a combination of infrared triggering, light triggering and image triggering.

12. A primary terminal (901, 1300), wherein the primary terminal comprises:
a first receiving unit (1001), configured to receive a collaboration request activation signal triggered by a user;
a connecting unit (1002), configured to establish connections to secondary terminals in a wireless connection manner when the first receiving unit receives the collaboration request activation signal;
a second receiving unit (1003), configured to receive device configuration parameters of the secondary terminals that have established connections to the primary terminal by using the connecting unit;
a first calculating unit (1004), configured to calculate and display, according to the device configuration parameters received by the second receiving unit and the number of secondary terminals, at least one arrangement shape of all terminals and at least one demarcated gesture that matches each arrangement shape;
a recording unit (1005), configured to, after the first calculating unit calculates and displays the at least one arrangement shape of all terminals and the at least one demarcated gesture that matches each arrangement shape, record one arrangement shape selected by the user and one demarcated gesture that matches the arrangement shape;
a third receiving unit (1006), configured to receive sensor trigger information sent by at least one secondary terminal that has established a connection to the primary terminal by using the connecting unit, wherein the sensor trigger information comprises a trigger time generated by a sensor of the at least one secondary terminal based on the demarcated gesture; and
a second calculating unit (1007), configured to calculate, according to the arrangement shape and the demarcated gesture that are recorded by the recording unit and the sensor trigger information received by the third receiving unit, an arrangement sequence of all terminals and relative positions between the terminals by calculating, by the primary terminal, a trigger time difference between sensor trigger information of successively triggered sensors due to the use of the demarcated gesture.

13. The primary terminal (901, 1300) according to claim 12, wherein the primary terminal is a terminal among all terminals that meets a preset condition.

14. The primary terminal according to claim 12 or 13, wherein the sensor trigger information comprises:
a trigger manner and a sensor triggering type; wherein
information about the sensor triggering type comprises one or a combination of infrared triggering, light triggering and image triggering.

15. The primary terminal according to any one of claims 12 to 14, wherein the second calculating unit (1007) comprises:
an information determining subunit (1201), configured to determine, from at least one piece of sensor trigger information that is sent by each secondary terminal and received by the third receiving unit, sensor trigger information provided by a sensor of a highest priority;
a sequence determining subunit (1202), configured to arrange the terminals in a sequence according to trigger time comprised in the sensor trigger information that is provided by the sensor of the highest priority in each terminal and determined by the information determining subunit, and determine the arrangement sequence of the terminals according to the arrangement shape and the demarcated gesture that are recorded by the recording unit; and
a first position determining subunit (1203), configured to calculate, according to the trigger time comprised in the sensor trigger information that is provided by the sensor of the highest priority in each terminal and determined by the information determining subunit, a trigger time difference between successively triggered terminals as a relative position between the successively triggered terminals.

16. The primary terminal according to claim 15, wherein the second calculating unit (1007) further comprises:
a second position determining subunit, configured to calculate, according to an empirical speed value and the trigger time difference that is obtained by the first position determining subunit by means of calculation, a relative distance between the successively triggered terminals as the relative position between the successively triggered terminals.

17. The primary terminal according to claim 14, wherein the primary terminal further comprises:
a failure prompting unit (1109), configured to display failure information; and
a first validity determining unit (1107), configured to determine whether the third receiving unit has received sensor trigger information detected by all the secondary terminals, wherein if a result of the determining of the first validity determining unit is yes, the second calculating unit calculates, according to the arrangement shape and the demarcated gesture that are recorded by the recording unit and the sensor trigger information received by the third receiving unit, the arrangement sequence of all terminals and the relative positions between the terminals; and if the result of the determining of the first validity determining unit is no, the failure prompting unit displays the failure information, and the third receiving unit receives again sensor trigger information sent by at least one secondary terminal that has established a connection to the primary terminal by using the connecting unit.

18. The primary terminal (901, 1300) according to claim 14, wherein the primary terminal further comprises:
a failure prompting unit (1109), configured to display failure information; and
a second validity determining unit (1108), configured to determine whether an exception exists in the sensor trigger information received by the third receiving unit, wherein if a result of the determining of the second validity determining unit is yes, the failure prompting unit displays the failure information, and the third receiving unit receives again sensor trigger information sent by at least one secondary terminal that has established a connection to the primary terminal by using the connecting unit; and if the result of the determining of the second validity determining unit is no, the second calculating unit calculates, according to the arrangement shape and the demarcated gesture that are recorded by the recording unit and the sensor trigger information received by the third receiving unit, the arrangement sequence of all terminals and the relative positions between the terminals.

19. The terminal according to claim 18, wherein the second validity determining unit is specifically configured to:
determine, according to the arrangement shape and the demarcated gesture that are recorded by the recording unit, whether any abnormal trigger time exists in the sensor trigger information received by the third receiving unit; or
determine whether any abnormal sensor triggering type exists in the sensor trigger information received by the third receiving unit.

20. A secondary terminal (902, 1500), wherein the secondary terminal comprises:
a receiving unit (1402), configured to receive a collaboration request activation signal triggered by a user;
a connecting unit (1401), configured to establish a connection to a primary terminal in a wireless connection manner when the receiving unit receives the collaboration request activation signal;
a first sending unit (1403), configured to send a device configuration parameter to the primary terminal, so that the primary terminal calculates and displays, according to received device configuration parameters of secondary terminals and the number of secondary terminals, at least one arrangement shape of all terminals and at least one demarcated gesture that matches each arrangement shape; and
a second sending unit (1404), configured to, when it is detected that a sensor is triggered, by the demarcated gesture, send detected sensor trigger information to the primary terminal, wherein the sensor trigger information comprises a trigger time generated by a secondary terminal, so that the primary terminal calculates, according to the recorded arrangement shape and demarcated gesture, and the sensor trigger information, an arrangement sequence of all terminals and relative positions between the terminals by calculating, by the primary terminal, a trigger time difference between sensor trigger information of successively triggered sensors due to the use of the demarcated gesture.

21. The secondary terminal according to claim 20, wherein the primary terminal is a terminal among all terminals that meets a preset condition.

22. The secondary terminal according to claim 20 or 21, wherein the sensor trigger information comprises:
a trigger manner and a sensor triggering type; wherein
information about the sensor triggering type comprises one or a combination of infrared triggering, light triggering and image triggering.

23. A multi-terminal positioning system, wherein the system comprises:
a primary terminal and several secondary terminals, wherein
the primary terminal is the primary terminal according to any one of claims 12 to 19; and
the secondary terminal is the secondary terminal according to any one of claims 20 to 22.

## Patentansprüche

1. Positionierungsverfahren für mehrere Endgeräte, wobei das Verfahren umfasst:
Einrichten (101, 401) von Verbindungen mit sekundären Endgeräten (902) auf drahtlos verbindende Weise durch ein primäres Endgerät (901) nach Empfangen eines von einem Benutzer angesteuerten Aktivierungssignals für eine Kollaborationsanforderung;
Berechnen und Anzeigen (102, 402), durch das primäre Endgerät (901) in Übereinstimmung mit empfangenen Vorrichtungskonfigurationsparametern der sekundären Endgeräte und der Anzahl der sekundären Endgeräte, mindestens einer Anordnungsform aller Endgeräte und mindestens einer begrenzten Geste, die mit der jeweiligen Anordnungsform übereinstimmt, und Aufzeichnen einer vom Benutzer ausgewählten Anordnungsform und einer begrenzten Geste, die mit der Anordnungsform übereinstimmt;
Ansteuern von Sensoren der Endgeräte unter Verwendung der begrenzten Geste;
Empfangen (103, 403), durch das primäre Endgerät, von von mindestens einem sekundären Endgerät gesendeten Sensoransteuerinformationen, wobei die Sensoransteuerinformationen eine Ansteuerzeit umfassen, die vom mindestens einen sekundären Endgerät erzeugt wurde; und
Berechnen (104, 407) einer Anordnungsabfolge aller Endgeräte und relativer Positionen zwischen den Endgeräten durch das primäre Endgerät in Übereinstimmung mit der aufgezeichneten Anordnungsform und der aufgezeichneten begrenzten Geste und den Sensoransteuerinformationen durch Berechnen, durch das primäre Endgerät, einer Ansteuerzeitdifferenz zwischen den Sensoransteuerinformationen von aufeinanderfolgend angesteuerten Sensoren aufgrund der Verwendung der begrenzten Geste.

2. Verfahren nach Anspruch 1, wobei das primäre Endgerät (901) ein Endgerät unter allen Endgeräten ist, das eine vorbestimmte Bedingung erfüllt.

3. Verfahren nach Anspruch 1 oder 2, wobei die Sensoransteuerinformationen ferner umfassen:
eine Ansteuerweise und einen Sensoransteuertyp, wobei
Informationen über den Sensoransteuertyp eine oder eine Kombination von Infrarotansteuerung, Lichtansteuerung und Bildansteuerung umfassen.

4. Verfahren nach einem der Ansprüche 1 bis 3, wobei das Berechnen, durch das primäre Endgerät in Übereinstimmung mit der aufgezeichneten Anordnungsform und der aufgezeichneten Geste und den Sensoransteuerinformationen, einer Anordnungsabfolge aller Endgeräte und relativer Positionen zwischen den Endgeräten umfasst:
Ermitteln von Sensoransteuerinformationen, die von einem Sensor mit einer höchsten Priorität bereitgestellt wurden, aus mindestens einem Stück von von jedem sekundären Endgerät gesendeten Sensoransteuerinformationen durch das primäre Endgerät;
Anordnen der Endgeräte in einer Abfolge in Übereinstimmung mit einer Ansteuerzeit, die in den vom Sensor mit der höchsten Priorität in jedem Endgerät bereitgestellten Sensoransteuerinformationen beinhaltet ist, durch das primäre Endgerät und Ermitteln der Anordnungsabfolge der Endgeräte in Übereinstimmung mit der aufgezeichneten Anordnungsform und der begrenzten Geste; und
Berechnen einer Ansteuerzeitdifferenz zwischen aufeinanderfolgend angesteuerten Endgeräten als eine relative Position zwischen den aufeinanderfolgend angesteuerten Endgeräten durch das primäre Endgerät in Übereinstimmung mit der Ansteuerzeit, die in den vom Sensor mit der höchsten Priorität in jedem Endgerät bereitgestellten Sensoransteuerinformationen beinhaltet ist.

5. Verfahren nach Anspruch 4, wobei das Verfahren ferner umfasst:
Berechnen einer relativen Distanz zwischen den aufeinanderfolgend angesteuerten Endgeräten als die relative Position zwischen den aufeinanderfolgend angesteuerten Endgeräten durch das primäre Endgerät in Übereinstimmung mit der Ansteuerzeitdifferenz und einem empirischen Geschwindigkeitswert.

6. Verfahren nach Anspruch 1, wobei das Verfahren nach dem Empfangen von Sensoransteuerinformationen, die durch mindestens ein sekundäres Endgerät erfasst wurden, durch das primäre Endgerät ferner umfasst:
Ermitteln (404) durch das primäre Endgerät, ob von allen sekundären Endgeräten gesendete Sensoransteuerinformationen empfangen werden; falls ja, Berechnen (407) der Anordnungsabfolge aller Endgeräte und der relativen Positionen zwischen den Endgeräten in Übereinstimmung mit der aufgezeichneten Anordnungsform und der aufgezeichneten begrenzten Geste und den Sensoransteuerinformationen; und falls nein, Anzeigen (406) von Fehlerinformationen und nochmaliges Empfangen (403) von Sensoransteuerinformationen, die von mindestens einem sekundären Endgerät gesendet wurden.

7. Verfahren nach Anspruch 6, wobei, nachdem das primäre Endgerät ermittelt (404), ob die von allen sekundären Endgeräten gesendeten Sensoransteuerinformationen empfangen wurden, und vor dem Berechnen (407) der Anordnungsabfolge aller Endgeräte und der relativen Positionen zwischen den Endgeräten in Übereinstimmung mit der aufgezeichneten Anordnungsform und der aufgezeichneten begrenzten Geste und den Sensoransteuerinformationen das Verfahren ferner umfasst:
Ermitteln (405) durch das primäre Endgerät, ob es eine Ausnahme in den Sensoransteuerinformationen gibt; falls ja, Anzeigen von Fehlerinformationen und nochmaliges Empfangen von Sensoransteuerinformationen, die von mindestens einem sekundären Endgerät gesendet wurden; und falls nein, Berechnen der Anordnungsabfolge aller Endgeräte und der relativen Positionen zwischen den Endgeräten in Übereinstimmung mit der aufgezeichneten Anordnungsform und der aufgezeichneten begrenzten Geste und den Sensoransteuerinformationen.

8. Verfahren nach Anspruch 7, wobei das Ermitteln durch das primäre Endgerät, ob es eine Ausnahme in den Sensoransteuerinformationen gibt, umfasst:
Ermitteln durch das primäre Endgerät in Übereinstimmung mit der aufgezeichneten Anordnungsform und der begrenzten Geste, ob es irgendeine anormale Ansteuerzeit in den Sensoransteuerinformationen gibt; oder
Ermitteln durch das primäre Endgerät, ob es irgendeinen anormalen Sensoransteuertyp in den Sensoransteuerinformationen gibt.

9. Positionierungsverfahren für mehrere Endgeräte, wobei das Verfahren umfasst:
Einrichten (801) einer Verbindung mit einem primären Endgerät (901) auf drahtlos verbindende Weise durch ein sekundäres Endgerät (902) nach Empfangen eines von einem Benutzer angesteuerten Aktivierungssignals für eine Kollaborationsanforderung;
Senden (802) eines Vorrichtungskonfigurationsparameters durch das sekundäre Endgerät (902) an das primäre Endgerät, sodass das primäre Endgerät mindestens eine Anordnungsform aller Endgeräte und mindestens eine begrenzte Geste, die mit der jeweiligen Anordnungsform übereinstimmt, in Übereinstimmung mit empfangenen Vorrichtungskonfigurationsparametern von sekundären Endgeräten und der Anzahl der sekundären Endgeräte berechnet und anzeigt; und
wenn erkannt wird, dass ein Sensor durch Verwendung der begrenzten Geste angesteuert wurde, Senden (803) der erfassten Sensoransteuerinformationen durch das sekundäre Endgerät an das primäre Endgerät, wobei die Sensoransteuerinformationen eine vom sekundären Endgerät erzeugte Ansteuerzeit umfassen, sodass das primäre Endgerät in Übereinstimmung mit der aufgezeichneten Anordnungsform und der aufgezeichneten begrenzten Geste und den Sensoransteuerinformationen eine Anordnungsabfolge aller Endgeräte und die relativen Positionen zwischen den Endgeräten durch Berechnen, durch das primäre Endgerät, einer Ansteuerzeitdifferenz zwischen den Sensoransteuerinformationen von aufeinanderfolgend angesteuerten Sensoren aufgrund der Verwendung der begrenzten Geste berechnet.

10. Verfahren nach Anspruch 9, wobei das primäre Endgerät ein Endgerät unter allen Endgeräten ist, das eine vorbestimmte Bedingung erfüllt.

11. Verfahren nach Anspruch 9 oder 10, wobei die Sensoransteuerinformationen umfassen:
eine Ansteuerweise und einen Sensoransteuertyp; wobei
Informationen über den Sensoransteuertyp eine oder eine Kombination von Infrarotansteuerung, Lichtansteuerung und Bildansteuerung umfassen.

12. Primäres Endgerät (901, 1300), wobei das primäre Endgerät umfasst:
eine erste Empfangseinheit (1001), die konfiguriert ist, ein von einem Benutzer angesteuertes Aktivierungssignal für eine Kollaborationsanforderung zu empfangen;
eine Verbindungseinheit (1002), die konfiguriert ist, Verbindungen mit sekundären Endgeräten auf drahtlos verbindende Weise einzurichten, wenn die erste Empfangseinheit das Aktivierungssignal für eine Kollaborationsanforderung empfängt;
eine zweite Empfangseinheit (1003), die konfiguriert ist, Vorrichtungskonfigurationsparameter der sekundären Endgeräte zu empfangen, die unter Verwendung der Verbindungseinheit Verbindungen mit dem primären Endgerät eingerichtet haben;
eine erste Berechnungseinheit (1004), die konfiguriert ist, in Übereinstimmung mit den Vorrichtungskonfigurationsparametern, die von der zweiten Empfangseinheit empfangen wurden, und der Anzahl der sekundären Endgeräte mindestens eine Anordnungsform aller Endgeräte und mindestens eine begrenzte Geste, die mit der jeweiligen Anordnungsform übereinstimmt, zu berechnen und anzuzeigen;
eine Aufzeichnungseinheit (1005), die konfiguriert ist, nachdem die erste Berechnungseinheit die mindestens eine Anordnungsform aller Endgeräte und die mindestens eine begrenzte Geste, die mit der jeweiligen Anordnungsform übereinstimmt, berechnet und anzeigt, eine vom Benutzer ausgewählte Anordnungsform und eine begrenzte Geste aufzuzeichnen, die mit der Anordnungsform übereinstimmt;
eine dritte Empfangseinheit (1006), die konfiguriert ist, Sensoransteuerinformationen zu empfangen, die von mindestens einem sekundären Endgerät gesendet wurden, das unter Verwendung der Verbindungseinheit eine Verbindung mit dem primären Endgerät eingerichtet hat, wobei die Sensoransteuerinformationen eine Ansteuerzeit umfassen, die von einem Sensor des mindestens einen sekundären Endgeräts auf Basis der begrenzten Geste erzeugt wurde; und
eine zweite Berechnungseinheit (1007), die konfiguriert ist, eine Anordnungsabfolge aller Endgeräte und relative Positionen zwischen den Endgeräten in Übereinstimmung mit der Anordnungsform und der begrenzten Geste, die von der Aufzeichnungseinheit aufgezeichnet sind, und den von der dritten Empfangseinheit empfangenen Sensoransteuerinformationen durch Berechnen, durch das primäre Endgerät, einer Ansteuerzeitdifferenz zwischen den Sensoransteuerinformationen von aufeinanderfolgend angesteuerten Sensoren aufgrund der Verwendung der begrenzten Geste zu berechnen.

13. Primäres Endgerät (901, 1300) nach Anspruch 12, wobei das primäre Endgerät ein Endgerät unter allen Endgeräten ist, das eine vorbestimmte Bedingung erfüllt.

14. Primäres Endgerät nach Anspruch 12 oder 13, wobei die Sensoransteuerinformationen umfassen:
eine Ansteuerweise und einen Sensoransteuertyp; wobei
Informationen über den Sensoransteuertyp eine oder eine Kombination von Infrarotansteuerung, Lichtansteuerung und Bildansteuerung umfassen.

15. Primäres Endgerät nach einem der Ansprüche 12 bis 14, wobei die zweite Berechnungseinheit (1007) umfasst:
eine Informationsermittlungsuntereinheit (1201), die konfiguriert ist, Sensoransteuerinformationen, die von einem Sensor mit einer höchsten Priorität bereitgestellt wurden, aus mindestens einem Stück von von jedem sekundären Endgerät gesendeten und von der dritten Empfangseinheit empfangenen Sensoransteuerinformationen zu ermitteln;
eine Abfolgeermittlungsuntereinheit (1202), die konfiguriert ist, die Endgeräte in einer Abfolge in Übereinstimmung mit einer Ansteuerzeit anzuordnen, die in den Sensoransteuerinformationen beinhaltet ist, die vom Sensor mit der höchsten Priorität in jedem Endgerät bereitgestellt und von der Informationsermittlungsuntereinheit ermittelt wurden, und die Anordnungsabfolge der Endgeräte in Übereinstimmung mit der Anordnungsform und der begrenzten Geste zu ermitteln, die von der Aufzeichnungseinheit aufgezeichnet wurden; und
eine erste Positionsermittlungsuntereinheit (1203), die konfiguriert ist, eine Ansteuerzeitdifferenz zwischen aufeinanderfolgend angesteuerten Endgeräten als eine relative Position zwischen den aufeinanderfolgend angesteuerten Endgeräten in Übereinstimmung mit der Ansteuerzeit zu berechnen, die in den vom Sensor mit der höchsten Priorität in jedem Endgerät bereitgestellten und von der Informationsermittlungsuntereinheit ermittelten Sensoransteuerinformationen beinhaltet ist.

16. Primäres Endgerät nach Anspruch 15, wobei die zweite Berechnungseinheit (1007) ferner umfasst:
eine zweite Positionsermittlungsuntereinheit, die konfiguriert ist, in Übereinstimmung mit einem empirischen Geschwindigkeitswert und der Ansteuerzeitdifferenz, die von der ersten Positionsermittlungsuntereinheit mittels Berechnung erhalten wird, eine relative Distanz zwischen den aufeinanderfolgend angesteuerten Endgeräten als die relative Position zwischen den aufeinanderfolgend angesteuerten Endgeräten zu berechnen.

17. Primäres Endgerät nach Anspruch 14, wobei das primäre Endgerät ferner umfasst:
eine Fehleranzeigeeinheit (1109), die konfiguriert ist, Fehlerinformationen anzuzeigen; und
eine erste Gültigkeitsermittlungseinheit (1107), die konfiguriert ist, zu ermitteln, ob die dritte Empfangseinheit von allen sekundären Endgeräten erfasste Sensoransteuerinformationen empfangen hat, wobei, falls ein Ergebnis des Ermittelns der ersten Gültigkeitsermittlungseinheit ja ist, die zweite Berechnungseinheit in Übereinstimmung mit der Anordnungsform und der begrenzten Geste, die von der Aufzeichnungseinheit aufgezeichnet sind, und den von der dritten Empfangseinheit empfangenen Sensoransteuerinformationen die Anordnungsabfolge aller Endgeräte und die relativen Positionen zwischen den Endgeräten berechnet;
und falls das Ergebnis des Ermittelns der ersten Gültigkeitsermittlungseinheit nein ist, die Fehleranzeigeeinheit die Fehlerinformationen anzeigt und die dritte Empfangseinheit nochmals Sensoransteuerinformationen empfängt, die von mindestens einem sekundären Endgerät gesendet wurden, das unter Verwendung der Verbindungseinheit eine Verbindung mit dem primären Endgerät eingerichtet hat.

18. Primäres Endgerät (901, 1300) nach Anspruch 14, wobei das primäre Endgerät ferner umfasst:
eine Fehleranzeigeeinheit (1109), die konfiguriert ist, Fehlerinformationen anzuzeigen; und
eine zweite Gültigkeitsermittlungseinheit (1108), die konfiguriert ist, zu ermitteln, ob es in den von der dritten Empfangseinheit empfangenen Sensoransteuerinformationen eine Ausnahme gibt, wobei, falls ein Ergebnis des Ermittelns der zweiten Gültigkeitsermittlungseinheit ja ist, die Fehleranzeigeeinheit die Fehlerinformationen anzeigt und die dritte Empfangseinheit nochmals Sensoransteuerinformationen empfängt, die von mindestens einem sekundären Endgerät gesendet wurden, das unter Verwendung der Verbindungseinheit eine Verbindung mit dem primären Endgerät eingerichtet hat; und
falls das Ergebnis des Ermittelns der zweiten Gültigkeitsermittlungseinheit nein ist, die zweite Berechnungseinheit in Übereinstimmung mit der Anordnungsform und der begrenzten Geste, die von der Aufzeichnungseinheit aufgezeichnet sind, und den von der dritten Empfangseinheit empfangenen Sensoransteuerinformationen die Anordnungsabfolge aller Endgeräte und die relativen Positionen zwischen den Endgeräten berechnet.

19. Endgerät nach Anspruch 18, wobei die zweite Gültigkeitsermittlungseinheit namentlich konfiguriert ist:
in Übereinstimmung mit der Anordnungsform und der begrenzten Geste, die von der Aufzeichnungseinheit aufgezeichnet sind, zu ermitteln, ob es irgendeine anormale Ansteuerzeit in den von der dritten Empfangseinheit empfangenen Sensoransteuerinformationen gibt; oder
zu ermitteln, ob es irgendeinen anormalen Sensoransteuertyp in den von der dritten Empfangseinheit empfangenen Sensoransteuerinformationen gibt.

20. Sekundäres Endgerät (902, 1500), wobei das sekundäre Endgerät umfasst:
eine Empfangseinheit (1402), die konfiguriert ist, ein von einem Benutzer angesteuertes Aktivierungssignal für eine Kollaborationsanforderung zu empfangen;
eine Verbindungseinheit (1401), die konfiguriert ist, eine Verbindung mit einem primären Endgerät auf drahtlos verbindende Weise einzurichten, wenn die Empfangseinheit das Aktivierungssignal für eine Kollaborationsanforderung empfängt;
eine erste Sendeeinheit (1403), die konfiguriert ist, einen Vorrichtungskonfigurationsparameter an das primäre Endgerät zu senden, sodass das primäre Endgerät mindestens eine Anordnungsform aller Endgeräte und mindestens eine begrenzte Geste, die mit der jeweiligen Anordnungsform übereinstimmt, in Übereinstimmung mit empfangenen Vorrichtungskonfigurationsparametern von sekundären Endgeräten und der Anzahl der sekundären Endgeräte berechnet und anzeigt; und
eine zweite Sendeeinheit (1404), die konfiguriert ist, wenn erkannt wird, dass ein Sensor durch die begrenzte Geste angesteuert wurde, erfasste Sensoransteuerinformationen an das primäre Endgerät zu senden, wobei die Sensoransteuerinformationen eine von einem sekundären Endgerät erzeugte Ansteuerzeit umfasst, sodass das primäre Endgerät in Übereinstimmung mit der aufgezeichneten Anordnungsform und der aufgezeichneten begrenzten Geste und den Sensoransteuerinformationen eine Anordnungsabfolge aller Endgeräte und die relativen Positionen zwischen den Endgeräten durch Berechnen, durch das primäre Endgerät, einer Ansteuerzeitdifferenz zwischen den Sensoransteuerinformationen von aufeinanderfolgend angesteuerten Sensoren aufgrund der Verwendung der begrenzten Geste berechnet.

21. Sekundäres Endgerät nach Anspruch 20, wobei das primäre Endgerät ein Endgerät unter allen Endgeräten ist, das eine vorbestimmte Bedingung erfüllt.

22. Sekundäres Endgerät nach Anspruch 20 oder 21, wobei die Sensoransteuerinformationen umfassen:
eine Ansteuerweise und einen Sensoransteuertyp; wobei
Informationen über den Sensoransteuertyp eine oder eine Kombination von Infrarotansteuerung, Lichtansteuerung und Bildansteuerung umfassen.

23. Positionierungssystem für mehrere Endgeräte, wobei das System umfasst:
ein primäres Endgerät und mehrere sekundäre Endgeräte, wobei das primäre Endgerät das primäre Endgerät nach einem der Ansprüche 12 bis 19 ist; und
das sekundäre Endgerät das sekundäre Endgerät nach einem der Ansprüche 20 bis 22 ist.

## Revendications

1. Procédé de positionnement multi-terminal, le procédé comprenant les étapes consistant à :
établir (101, 401), par un terminal principal (901) après la réception d'un signal d'activation de demande de collaboration déclenché par un utilisateur, des connexions avec des terminaux secondaires (902) dans un mode de connexion sans fil ;
calculer et afficher (102, 402), par le terminal principal (901) d'après des paramètres de configuration de dispositif reçus concernant les terminaux secondaires et le nombre de terminaux secondaires, au moins une forme d'agencement de tous les terminaux et au moins un geste délimité qui correspond à chaque forme d'agencement, et enregistrer une forme d'agencement sélectionnée par l'utilisateur et
un geste délimité qui correspond à la forme d'agencement ;
déclencher des capteurs des terminaux à l'aide du geste délimité ;
recevoir (103, 403), par le terminal principal, des informations de déclenchement de capteur envoyées par au moins un terminal secondaire, les informations de déclenchement de capteur contenant une heure de déclenchement générée par ledit au moins un terminal secondaire ; et
calculer (104, 407), par le terminal principal, d'après la forme d'agencement et le geste délimité qui sont enregistrés et d'après les informations de déclenchement de capteur, une séquence d'agencements de tous les terminaux et les positions relatives entre les terminaux en calculant, par le terminal principal, une différence d'heure de déclenchement entre les informations de déclenchement de capteur des capteurs déclenchés successivement, due à l'utilisation du geste délimité.

2. Procédé selon la revendication 1, dans lequel le terminal principal (901) est un terminal faisant partie de l'ensemble des terminaux, qui satisfait à une condition prédéfinie.

3. Procédé selon la revendication 1 ou 2, dans lequel les informations de déclenchement de capteur contiennent également :
un mode de déclenchement et un type de déclenchement de capteur, et dans lequel les informations concernant le type de déclenchement de capteur contiennent l'un des éléments suivants ou une combinaison de ceux-ci : déclenchement infrarouge, déclenchement par la lumière et déclenchement par image.

4. Procédé selon l'une quelconque des revendications 1 à 3, dans lequel l'étape consistant à calculer, par le terminal principal, d'après la forme d'agencement et le geste délimité qui sont enregistrés et d'après les informations de déclenchement de capteur, une séquence d'agencements de tous les terminaux et les positions relatives entre les terminaux comprend les étapes consistant à :
déterminer, par le terminal principal à partir d'au moins un morceau des informations de déclenchement de capteur envoyées par chaque terminal secondaire, des informations de déclenchement de capteur fournies par un capteur ayant une priorité la plus élevée ;
agencer, par le terminal principal, les terminaux selon une séquence en fonction de l'heure de déclenchement contenue dans les informations de déclenchement de capteur fournies par le capteur ayant la priorité la plus élevée de chaque terminal, et déterminer la séquence d'agencements des terminaux d'après la forme d'agencement et le geste délimité qui sont enregistrés ; et
calculer, par le terminal principal d'après l'heure de déclenchement contenue dans les informations de déclenchement de capteur fournies par le capteur ayant la priorité la plus élevée de chaque terminal, une différence d'heure de déclenchement entre les terminaux déclenchés successivement qui constitue une position relative entre les terminaux déclenchés successivement.

5. Procédé selon la revendication 4, le procédé comprenant également l'étape consistant à :
calculer, par le terminal principal d'après la différence d'heure de déclenchement et une valeur de vitesse empirique, une distance relative entre les terminaux déclenchés successivement qui constitue la position relative entre les terminaux déclenchés successivement.

6. Procédé selon la revendication 1, le procédé, après la réception par le terminal principal des informations de déclenchement de capteur détectées par au moins un terminal secondaire, comprenant également les étapes consistant à :
déterminer (404), par le terminal principal, si des informations de déclenchement de capteur envoyées par tous les terminaux secondaires ont été reçues ; si oui, calculer (407), d'après la forme d'agencement et le geste délimité qui sont enregistrés et d'après les informations de déclenchement de capteur, la séquence d'agencements de tous les terminaux et les positions relatives entre les terminaux ; et si ce n'est pas le cas, afficher (406) des informations d'échec et recevoir (403) à nouveau des informations de déclenchement de capteur envoyées par au moins un terminal secondaire.

7. Procédé selon la revendication 6, le procédé, après que le terminal principal a déterminé (404) si les informations de déclenchement de capteur envoyées par tous les terminaux secondaires ont été reçues, et avant l'étape consistant à calculer (407), d'après la forme d'agencement et le geste délimité qui sont enregistrés et d'après les informations de déclenchement de capteur, la séquence d'agencements de tous les terminaux et les positions relatives entre les terminaux, comprenant également les étapes consistant à :
déterminer (405), par le terminal principal, s'il existe une exception dans les informations de déclenchement de capteur ; si oui, afficher des informations d'échec et recevoir à nouveau des informations de déclenchement de capteur envoyées par au moins un terminal secondaire ; et si ce n'est pas le cas, calculer, d'après la forme d'agencement et le geste délimité qui sont enregistrés et d'après les informations de déclenchement de capteur, la séquence d'agencements de tous les terminaux et les positions relatives entre les terminaux.

8. Procédé selon la revendication 7, dans lequel l'étape consistant à déterminer, par le terminal principal, s'il existe une exception dans les informations de déclenchement de capteur comprend les étapes consistant à :
déterminer, par le terminal principal d'après la forme d'agencement et le geste délimité qui sont enregistrés, s'il existe une heure de déclenchement anormale dans les informations de déclenchement de capteur ; ou
déterminer, par le terminal principal, s'il existe un type de déclenchement de capteur anormal dans les informations de déclenchement de capteur.

9. Procédé de positionnement multi-terminal, le procédé comprenant les étapes consistant à :
établir (801), par un terminal secondaire (902) après la réception d'un signal d'activation de demande de collaboration déclenché par un utilisateur, une connexion avec un terminal principal (901) dans un mode de connexion sans fil ;
envoyer (802), par le terminal secondaire (902), un paramètre de configuration de dispositif au terminal principal, afin que le terminal principal calcule et affiche, d'après des paramètres de configuration de dispositif reçus concernant les terminaux secondaires et le nombre de terminaux secondaires, au moins une forme d'agencement de tous les terminaux et au moins un geste délimité qui correspond à chaque forme d'agencement ; et
lorsqu'il est détecté qu'un capteur est déclenché par l'utilisation du geste délimité, envoyer (803), par le terminal secondaire, les informations de déclenchement de capteur détectées au terminal principal, les informations de déclenchement de capteur contenant une heure de déclenchement générée par le terminal secondaire, afin que le terminal principal calcule, d'après la forme d'agencement et le geste délimité qui sont enregistrés et d'après les informations de déclenchement de capteur, une séquence d'agencements de tous les terminaux et les positions relatives entre les terminaux en calculant, par le terminal principal, une différence d'heure de déclenchement entre les informations de déclenchement de capteur des capteurs déclenchés successivement, due à l'utilisation du geste délimité.

10. Procédé selon la revendication 9, dans lequel le terminal principal est un terminal faisant partie de l'ensemble des terminaux, qui satisfait à une condition prédéfinie.

11. Procédé selon la revendication 9 ou 10, dans lequel les informations de déclenchement de capteur contiennent :
un mode de déclenchement et un type de déclenchement de capteur ;
les informations concernant le type de déclenchement de capteur contenant l'un des éléments suivants ou une combinaison de ceux-ci : déclenchement infrarouge, déclenchement par la lumière et déclenchement par image.

12. Terminal principal (901, 1300), le terminal principal comprenant :
une première unité de réception (1001), conçue pour recevoir un signal d'activation de demande de collaboration déclenché par un utilisateur ;
une unité de connexion (1002), conçue pour établir des connexions avec des terminaux secondaires dans un mode de connexion sans fil lorsque la première unité de réception reçoit le signal d'activation de demande de collaboration ;
une deuxième unité de réception (1003), conçue pour recevoir des paramètres de configuration de dispositif concernant les terminaux secondaires qui ont établi des connexions avec le terminal principal en utilisant l'unité de connexion ;
une première unité de calcul (1004), conçue pour calculer et afficher, d'après les paramètres de configuration de dispositif reçus par la deuxième unité de réception et le nombre de terminaux secondaires, au moins une forme d'agencement de tous les terminaux et au moins un geste délimité qui correspond à chaque forme d'agencement ;
une unité d'enregistrement (1005), conçue pour, après que la première unité de calcul a calculé et affiché ladite au moins une forme d'agencement de tous les terminaux et ledit au moins un geste délimité qui correspond à chaque forme d'agencement, enregistrer une forme d'agencement sélectionnée par l'utilisateur et un geste délimité qui correspond à la forme d'agencement ;
une troisième unité de réception (1006), conçue pour recevoir des informations de déclenchement de capteur envoyées par au moins un terminal secondaire qui a établi une connexion avec le terminal principal en utilisant l'unité de connexion, les informations de déclenchement de capteur contenant une heure de déclenchement générée par un capteur dudit au moins un terminal secondaire d'après le geste délimité ; et
une deuxième unité de calcul (1007), conçue pour calculer, d'après la forme d'agencement et le geste délimité qui sont enregistrés par l'unité d'enregistrement et d'après les informations de déclenchement de capteur reçues par la troisième unité de réception, une séquence d'agencements de tous les terminaux et les positions relatives entre les terminaux en calculant, par le terminal principal, une différence d'heure de déclenchement entre les informations de déclenchement de capteur des capteurs déclenchés successivement, due à l'utilisation du geste délimité.

13. Terminal principal (901, 1300) selon la revendication 12, le terminal principal étant un terminal faisant partie de l'ensemble des terminaux, qui satisfait à une condition prédéfinie.

14. Terminal principal selon la revendication 12 ou 13, les informations de déclenchement de capteur contenant :
un mode de déclenchement et un type de déclenchement de capteur ;
les informations concernant le type de déclenchement de capteur contenant l'un des éléments suivants ou une combinaison de ceux-ci : déclenchement infrarouge, déclenchement par la lumière et déclenchement par image.

15. Terminal principal selon l'une quelconque des revendications 12 à 14, dans lequel la deuxième unité de calcul (1007) comprend :
une sous-unité de détermination d'informations (1201), conçue pour déterminer, à partir d'au moins un morceau des informations de déclenchement de capteur qui sont envoyées par chaque terminal secondaire et reçues par la troisième unité de réception, des informations de déclenchement de capteur fournies par un capteur ayant une priorité la plus élevée ;
une sous-unité de détermination de séquence (1202), conçue pour agencer les terminaux selon une séquence en fonction de l'heure de déclenchement contenue dans les informations de déclenchement de capteur qui sont fournies par le capteur ayant la priorité la plus élevée de chaque terminal et déterminées par la sous-unité de détermination d'informations, et déterminer la séquence d'agencements des terminaux d'après la forme d'agencement et le geste délimité qui sont enregistrés par l'unité d'enregistrement ; et
une première sous-unité de détermination de position (1203), conçue pour calculer, d'après l'heure de déclenchement contenue dans les informations de déclenchement de capteur qui sont fournies par le capteur ayant la priorité la plus élevée de chaque terminal et déterminées par la sous-unité de détermination d'informations, une différence d'heure de déclenchement entre les terminaux déclenchés successivement qui constitue une position relative entre les terminaux déclenchés successivement.

16. Terminal principal selon la revendication 15, dans lequel la deuxième unité de calcul (1007) comprend également :
une deuxième sous-unité de détermination de position, conçue pour calculer, d'après une valeur de vitesse empirique et la différence d'heure de déclenchement qui est obtenue par la première sous-unité de détermination de position au moyen d'un calcul, une distance relative entre les terminaux déclenchés successivement qui constitue la position relative entre les terminaux déclenchés successivement.

17. Terminal principal selon la revendication 14, le terminal principal comprenant également :
une unité d'indication d'échec (1109), conçue pour afficher des informations d'échec ; et
une première unité de détermination de validité (1107), conçue pour déterminer si la troisième unité de réception a reçu les informations de déclenchement de capteur détectées par tous les terminaux secondaires, dans lequel si un résultat de la détermination effectuée par la première unité de détermination de validité est oui, la deuxième unité de calcul calcule, d'après la forme d'agencement et le geste délimité qui sont enregistrés par l'unité d'enregistrement et d'après les informations de déclenchement de capteur reçues par la troisième unité de réception, la séquence d'agencements de tous les terminaux et les positions relatives entre les terminaux ; et si le résultat de la détermination effectuée par la première unité de détermination de validité est non, l'unité d'indication d'échec affiche les informations d'échec, et la troisième unité de réception reçoit à nouveau des informations de déclenchement de capteur envoyées par au moins un terminal secondaire qui a établi une connexion avec le terminal principal en utilisant l'unité de connexion.

18. Terminal principal (901, 1300) selon la revendication 14, le terminal principal comprenant également :
une unité d'indication d'échec (1109), conçue pour afficher des informations d'échec ; et
une deuxième unité de détermination de validité (1108), conçue pour déterminer s'il existe une exception dans les informations de déclenchement de capteur reçues par la troisième unité de réception, dans lequel si un résultat de la détermination effectuée par la deuxième unité de détermination de validité est oui, l'unité d'indication d'échec affiche les informations d'échec, et la troisième unité de réception reçoit à nouveau des informations de déclenchement de capteur envoyées par au moins un terminal secondaire qui a établi une connexion avec le terminal principal en utilisant l'unité de connexion ; et si le résultat de la détermination effectuée par la deuxième unité de détermination de validité est non, la deuxième unité de calcul calcule, d'après la forme d'agencement et le geste délimité qui sont enregistrés par l'unité d'enregistrement et d'après les informations de déclenchement de capteur reçues par la troisième unité de réception, la séquence d'agencements de tous les terminaux et les positions relatives entre les terminaux.

19. Terminal selon la revendication 18, dans lequel la deuxième unité de détermination de validité est spécifiquement conçue pour :
déterminer, d'après la forme d'agencement et le geste délimité qui sont enregistrés par l'unité d'enregistrement, s'il existe une heure de déclenchement anormale dans les informations de déclenchement de capteur reçues par la troisième unité de réception ; ou
déterminer s'il existe un type de déclenchement de capteur anormal dans les informations de déclenchement de capteur reçues par la troisième unité de réception.

20. Terminal secondaire (902, 1500), le terminal secondaire comprenant :
une unité de réception (1402), conçue pour recevoir un signal d'activation de demande de collaboration déclenché par un utilisateur ;
une unité de connexion (1401), conçue pour établir une connexion avec un terminal principal dans un mode de connexion sans fil lorsque l'unité de réception reçoit le signal d'activation de demande de collaboration ;
une première unité d'envoi (1403), conçue pour envoyer un paramètre de configuration de dispositif au terminal principal, afin que le terminal principal calcule et affiche, d'après des paramètres de configuration de dispositif reçus concernant les terminaux secondaires et le nombre de terminaux secondaires, au moins une forme d'agencement de tous les terminaux et au moins un geste délimité qui correspond à chaque forme d'agencement ; et
une deuxième unité d'envoi (1404), conçue pour, lorsqu'il est détecté qu'un capteur est déclenché, par le geste délimité, envoyer les informations de déclenchement de capteur détectées au terminal principal, les informations de déclenchement de capteur contenant une heure de déclenchement générée par un terminal secondaire, afin que le terminal principal calcule, d'après la forme d'agencement et le geste délimité qui sont enregistrés et d'après les informations de déclenchement de capteur, une séquence d'agencements de tous les terminaux et les positions relatives entre les terminaux en calculant, par le terminal principal, une différence d'heure de déclenchement entre les informations de déclenchement de capteur des capteurs déclenchés successivement, due à l'utilisation du geste délimité.

21. Terminal secondaire selon la revendication 20, le terminal principal étant un terminal faisant partie de l'ensemble des terminaux, qui satisfait à une condition prédéfinie.

22. Terminal secondaire selon la revendication 20 ou 21, les informations de déclenchement de capteur contenant :
un mode de déclenchement et un type de déclenchement de capteur ;
les informations concernant le type de déclenchement de capteur contenant l'un des éléments suivants ou une combinaison de ceux-ci : déclenchement infrarouge, déclenchement par la lumière et déclenchement par image.

23. Système de positionnement multi-terminal, le système comprenant :
un terminal principal et plusieurs terminaux secondaires,
le terminal principal étant le terminal principal selon l'une quelconque des revendications 12 à 19 ; et
le terminal secondaire étant le terminal secondaire selon l'une quelconque des revendications 20 à 22.
